# EUROPÄISCHE PATENTSCHRIFT

(11) **EP 3 941 614 B1**
(45) Veröffentlichungstag und Bekanntmachung des Hinweises auf die Patenterteilung: **19.11.2025**
(21) Anmeldenummer: 20718147.0
(22) Anmeldetag: 17.03.2020
(51) Int. Cl.: B01D 63/02, B01D 67/00, B01D 69/08

(54) **ANLAGE UND VERFAHREN ZUR HERSTELLUNG VON HOHLFASERMEMBRANEN**
SYSTEM AND METHOD FOR PRODUCING HOLLOW FIBRE MEMBRANES
INSTALLATION ET PROCÉDÉ DE FABRICATION DE MEMBRANES À FIBRES CREUSES

(30) Priorität: 20.03.2019 DE 102019203837
(43) Veröffentlichungstag der Anmeldung: 26.01.2022
(73) Patentinhaber: Fresenius Medical Care Deutschland GmbH, 61352 Bad Homburg (DE)
(72) Erfinder: PAUL, Michael, 66822 Lebach (DE)
(74) Vertreter: Ricker, Mathias
(86) Internationale Anmeldenummer: PCT/EP2020/057231
(87) Internationale Veröffentlichungsnummer: WO 2020/187888

(56) Entgegenhaltungen:
- EP-A1- 2 591 847
- EP-A1- 3 037 156
- JP-A- 2006 068 689
- JP-A- S6 078 604

## Beschreibung

Die Erfindung betrifft eine Anlage zur Herstellung von Hohlfasermembranen. Insbesondere betrifft die Erfindung eine Anlage zur Herstellung von Hohlfasermembranen, wobei die Anlage eine verbesserte Trocknungseinheit aufweist.

In weiteren Aspekten betrifft die Erfindung Verfahren zu Herstellung von Hohlfasermembranen. Insbesondere betrifft die Erfindung Verfahren zur Herstellung von Hohlfasermembranen mit einer verbesserten Trocknung der Hohlfasermembranen.

### HINTERGRUND DER ERFINDUNG

Hohlfasermembranen finden in der Filtrationstechnik breite Anwendung. Hohlfasermembranen werden insbesondere in der Medizintechnik verwendet, z.B. im Bereich der Dialyse, um das Blut nierenkranker Patienten von schädlichen Metaboliten zu befreien. In der Wasseraufbereitung werden ebenfalls Hohlfasermembranen verwendet, um kontaminiertes Wasser aufzubereiten. Die Hohlfasermembranen werden für derartige Anwendungen in sogenannte Hohlfasermembranfilter eingebaut. In diesen Hohlfasermembranfiltern ist eine Vielzahl von Hohlfasermembranen zu einem Hohlfasermembranbündel innerhalb eines zylindrischen Gehäuses des Hohlfasermembranfilters angeordnet. Ein Hohlfasermembranfilter für die Dialyse beinhaltet dabei in einer üblichen Ausführung 10.000 Hohlfasermembranen mit einer Länge von ca. 23 cm. Im Medizintechnikbereich, insbesondere im Bereich der Dialyse, werden derartige Hohlfasermembranfilter aus hygienischen Gründen für ihre Verwendung als Einmalartikel bereitgestellt. Es ergibt sich daher ein enormer Bedarf an Hohlfasermembranfiltern allein in der Dialyse, um nierenkranke Patienten mit der lebensnotwendigen Dialysetherapie versorgen zu können.

Um den großen Bedarf an Hohlfasermembranen für die Herstellung von Hohlfasermembranfiltern bereitstellen zu können, werden an die Produktivität der Herstellprozesse von Hohlfasermembranen enorme Anforderungen gestellt. Etabliert sind Methoden im sogenannten dry-wet-Spinnverfahren bei denen von einer fluiden Spinnmasse ausgegangen wird, die zu einem Spinnfaden extrudiert und in einem Phaseninversionsprozess zu einer Hohlfasermembran koaguliert und ausgefällt wird. Derartige Spinnprozesse sind dabei so ausgelegt, dass eine Vielzahl gleichzeitig hergestellter Hohlfasermembranen zu einer Schar von Hohlfasermembranen zusammengelegt und auf einer Haspel zu Bündelsträngen aufgenommen werden. Die Bündelstränge werden dann in benötigten Längen in einzelne Hohlfasermembranbündel unterteilt, die dann in Hohlfasermembranfiltern Verwendung finden.

Im Stand der Technik bekannte Verfahren zur Herstellung von Hohlfasermembranen im dry-wet-Verfahren gehen von einer vorbereiteten Spinnmasse aus. Eine typische Spinnmasse wird im Allgemeinen in Form einer Polymerlösung aus einem hydrophoben Polymer, einem hydrophilem Polymer, gegebenenfalls weiteren Additiven und einem polaren aprotischen Lösungsmittel hergestellt.

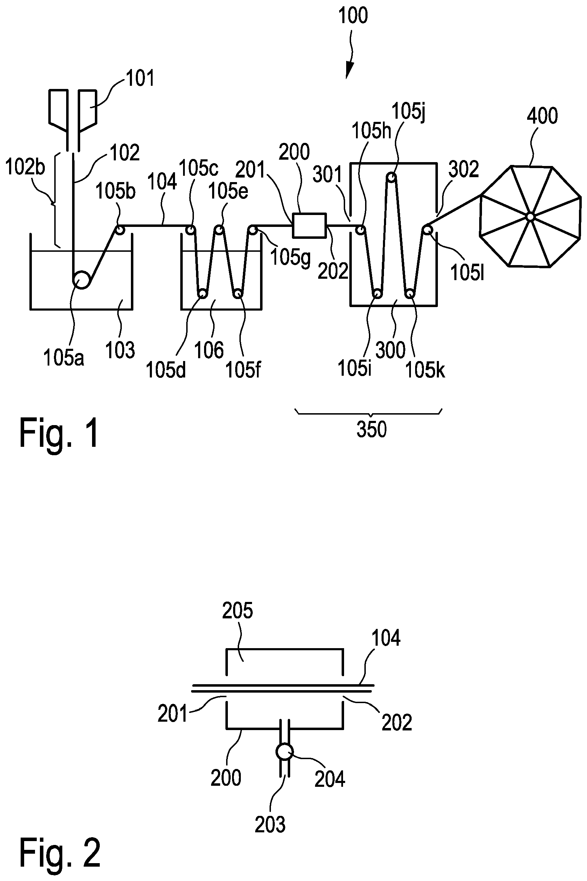

Die Spinnmasse wird in einer Spinneinheit durch Spinndüsen extrudiert. Die Spinneinheit kann über eine Vielzahl von Spinndüsen verfügen, sodass durch die Spinndüsen eine Schar von hohlen Spinnfäden extrudiert werden kann. Eine einzelne Spinndüse ist dabei so ausgelegt, dass der Hohlraum der Spinnfäden mit einem Koagulationsmedium verfüllt ist, das die Phaseninversion der Spinnmasse in dem Spinnfaden bewirkt. In der der vorliegenden Anmeldung werden die Begriffe *"Hohlraum"* und *"Lumen"* als Synonyme verwendet. Entsprechende Spinndüsen sind im Stand der Technik bekannt. Als ein Beispiel kann eine in den Fig. 1 bis Fig. 5 der WO 03/076701 A1 gezeigten Spinndüsen genannt werden. Die einzelnen Spinnfäden werden vertikal durch einen Fällspalt geführt und in ein Fällbad beispielsweise in Wasser eingeleitet, wo die Membranstruktur der Hohlfasermembran weiter verfestigt wird. Anschließend werden die einzelnen Hohlfasermembranen durch Umlenkrollen aus dem Fällbad ausgeleitet und über weitere Umlenkrollen und Führungsmittel meistens in ein oder mehrere Spülbäder geleitet, um Lösungsmittel und überschüssiges Polymer aus der Membran zu entfernen. Häufig enthalten die Spülbäder Wasser als Spülmedium.

Die Hohlfasermembranen sind nach dem Durchleiten durch das Fällbad und das Spülbad vollständig mit Flüssigkeit, insbesondere Wasser gefüllt, d.h. dass der Hohlraum der Hohlfasermembranen und die Poren der Wandungen der Hohlfasermembranen mit Flüssigkeit, insbesondere Wasser verfüllt sind. Die Hohlfasermembran transportiert damit nach Ausleiten aus dem Fällbad oder dem Spülbad beispielsweise ein Mehrfaches ihres Eigengewichts an Flüssigkeit.

Nach dem Spülbad werden gemäß der bekannten Herstellverfahren die Hohlfasermembranen getrocknet, indem die einzeln geführten Hohlfasermembranen über Umlenkrollen und geeignete Führungsmittel in eine Trocknungskammer eingeführt werden. In der Trocknungskammer wird die zu durchlaufende Wegstrecke der Hohlfasermembranen durch Umlenkrollen und Führungsmittel vorgegeben. Abhängig von der Transportgeschwindigkeit ergibt sich daraus eine vorgegebene Verweilzeit der Hohlfasermembranen in der Trocknungskammer. Die Trocknung wird dabei durch das Anlegen einer erhöhten Temperatur bewirkt. Dabei wird die Temperatur so eingestellt, dass die in der Hohlfasermembran transportierte Flüssigkeit, insbesondere Wasser, verdampft. Die verdampfte Flüssigkeit wird aus der Trocknungskammer ausgetragen, so dass die Hohlfasermembran nach dem Durchlaufen der Trocknungskammer in einem trockenen Zustand aus der Trocknungskammer ausgeleitet wird und weiteren Verarbeitungsschritten zugeführt werden kann.

Innerhalb des Herstellprozesses kann nach der Trocknung der Hohlfasermembranen ein Schritt der Ondulierung der Hohlfasermembranen durchgeführt werden. Dabei wird den Hohlfasermembranen durch geeignete Zahnräder mechanisch eine Wellenform aufgeprägt. Weiterhin ist bekannt, eine Schar von Hohlfasermembranen zusammenzuführen und durch eine Haspel aufzunehmen. Die für die Herstellung der Hohlfasermembranfilter benötigten Hohlfasermembranbündel werden durch Herausschneiden einzelner Bündelstränge aus den aufgehaspelten Hohlfasermembranen gewonnen.

Die Extrusionsrate der Spinnmasse, die Umlenkrollen und Führungsmittel sowie die Haspel zur Aufnahme der Hohlfasermembranen bestimmen die Geschwindigkeit, mit der die Hohlfasermembranen durch die Anlage zur Herstellung der Hohlfasermembranen transportiert werden können. Im Stand der Technik sind für die Herstellung von Hohlfasermembranen Transportgeschwindigkeiten von ca. 450 mm/s bekannt. Die Transportgeschwindigkeit der Hohlfasermembranen ist letztendlich entscheidend für die Produktivität des Herstellprozesses. Die Transportgeschwindigkeit kann jedoch nicht beliebig gesteigert werden, da bei zunehmender mechanischer Einwirkung auf die Hohlfasermembranen während des Transports mit einer erhöhten Anzahl geschädigter Fasern zu rechnen ist. Insbesondere ist mit Faserabrissen und mit dem Kollabieren einzelner Faser zu rechnen, wenn die Transportgeschwindigkeit zu hoch gewählt wird. Derartige Schädigungen der Hohlfasermembranen machen die durch die Haspel aufgenommenen zusammengeführten Hohlfasermembranen in Form ihrer herausgetrennten Hohlfasermembranbündel für die weitere Verarbeitung zu Hohlfasermembranfiltern unbrauchbar.

Ebenfalls kann sich auch der Trocknungsprozess bekannter Herstellverfahren schädigend auf die Hohlfasermembranen auswirken. Eine gewünschte hohe Produktivität bedingt, dass in den Verfahren im Stand der Technik hohe Temperaturen aufgewendet werden, um die Fasern in der Trocknungskammer bei einer vorgegebenen Transportrate vollständig trocknen zu können. Bei zu hohen Temperaturen sind Verformungen an den Hohlfasermembranen zu beobachten, die sie für die Verwendung für den Bau von Hohlfasermembranfiltern unbrauchbar macht. Weiter kann bei einer zu langen Einwirkung hoher Temperaturen eine thermooxidative Schädigung der Hohlfasern auftreten. Darüber hinaus ist die Aufwendung der hohen Trocknungstemperaturen in der Trocknungskammer mit hohem Energieaufwand verbunden, der den Herstellprozess wiederum verteuert.

Die GB 731,415 offenbart eine Vorrichtung zur Trocknung von Textilfasern, insbesondere Kunstseide. Die GB 731,415 beschreibt einen Trocknungskanal, durch den eine Mehrzahl von beispielsweise parallel angeordneten Textilfasern durchgeleitet wird. Der Trocknungskanal weist Heizelemente auf. Weiterhin wird beschrieben, dass dem Trocknungskanal Luft zum Trocknen der Textilfasern zugeführt wird.

Die US 2,509,279 beschreibt Vorrichtungen zur Behandlung von Fasern mit Fluiden oder Gasen. Die Fasern werden dabei durch Röhren geleitet, in denen diese mit den Gasen beaufschlagt werden können.

Die DE 509 429 zeigt eine Vorrichtung zum Trocknen gesponnener Kunstseidefäden. Die Kunstseidefäden werden mit kaltem Wasser gewaschen und zur Trocknung durch ein Rohr geführt, das mit heißer Luft gespeist wird. Anschließend werden die Fäden über eine beheizte Platte geführt und aufgespult. EP2591847 A1 offenbart ebenfalls eine Anlage zur Herstellung von Hohlfasermembranen mit einer rohrförmigen Druckkammer als Troknungseinheit.

### AUFGABE DER ERFINDUNG

Die im Stand der Technik bekannten Methoden zur Herstellung von Hohlfasermembranfiltern sind hinsichtlich ihrer Produktivität und ihrer Effizienz aus heutiger Sicht nicht mehr zufriedenstellend. Insbesondere besteht aus dem Blickwinkel der Produktion von Hohlfasermembranfiltern dauerhaft das Bedürfnis, die Geschwindigkeit der Herstellung von Hohlfasermembranen zu steigern. Darüber hinaus ist es auch ein Bedürfnis, in der Produktion von Hohlfasermembranen den Herstellprozess energieeffizient und kostengünstig zu optimieren.

### ZUSAMMENFASSUNG DER ERFINDUNG

In einem ersten Aspekt wird die Aufgabe durch eine Vorrichtung mit den Merkmalen von Anspruch 1 gelöst. Die Unteransprüche 2 bis 9 stellen alternative Ausführungsformen dar.

In einem zweiten Aspekt wird die Aufgabe durch ein Verfahren mit den Merkmalen nach Anspruch 10 gelöst. Die Unteransprüche 11-13 geben weitere bevorzugte Ausführungsformen wieder.

In einem dritten Aspekt wird die Aufgabe durch ein Verfahren zur Herstellung einer Hohlfasermembran gelöst, dass dadurch gekennzeichnet, dass die Spinngeschwindigkeit des Hohlfadens auf über 550 mm/ s, bevorzugt über 650 mm/s, weiter bevorzugt über 750 mm/s, eingestellt wird.

### DETAILLIERTE BESCHREIBUNG DER ERFINDUNG

In einem ersten Aspekt betrifft die Erfindung eine Anlage zur Herstellung mindestens einer Hohlfasermembran wie in Anspruch 1 definiert, aufweisend
eine Spinneinheit, aufweisend mindestens eine Ringspaltdüse, die fluidisch mit einer Quelle einer Spinnmasse und einer Quelle eines Koagulationsmediums verbunden ist, um aus der Spinnmasse mindestens einen hohlen Spinnfaden zu extrudieren, dessen Hohlraum mit dem Koagulationsmedium gefüllt ist,
ein Fällbad, zur Fällung des mindestens einen Spinnfadens zu mindestens einer Hohlfasermembran,
gegebenenfalls mindestens eine Spüleinheit zum Spülen der mindestens einen Hohlfasermembran,
mindestens eine Trocknungseinheit zur Trocknung der mindestens einen Hohlfasermembran,
gegebenenfalls eine Aufnahmeeinheit zur Aufnahme der mindestens einen Hohlfasermembran auf einen Träger,
wobei
die mindestens eine Trocknungseinheit einen Druckabschnitt aufweist, der so ausgebildet ist, dass in dem Druckabschnitt ein atmosphärischer Überdruck einstellbar ist, wobei der Druckabschnitt der Trocknungseinheit eine Druckkammer aufweist,
die einen Innenraum, einen Einlass zum Einleiten der mindestens einen Hohlfasermembran in den Innenraum der Druckkammer, einen Auslass zum Ausleiten der mindestens einen Hohlfasermembran aus dem Innenraum der Druckkammer und mindestens einen Gaseinlass aufweist, wobei der mindestens eine Gaseinlass in Fluidverbindung mit einer Gasquelle steht und der Druckabschnitt weiter so ausgebildet ist, das ein Überdruck über die Gasquelle im Innenraum der Druckkammer erzeugt werden kann, und die lichte Weite
des Innenraums der Druckkammer im Querschnitt parallel zur Laufrichtung der mindestens einen Hohlfasermembran mindestens eine Querschnittsvergrößerung und mindestens eine Querschnittsverkleinerung aufweist, wobei die Querschnittsvergrößerung vorzugsweise eine Konusform der Innenseite der Druckkammer bilden.

Die Anlage ist dabei so ausgebildet, dass der mindestens ein Spinnfaden in das Fällbad geleitet und zu mindestens einer Hohlfasermembran ausgefällt wird, wobei weiter
die aus dem Fällbad gewonnene mindestens eine Hohlfasermembran gegebenenfalls in ein Spülbad eingeleitet und gespült wird, wobei weiter
die aus dem Fällbad erhaltene mindestens eine Hohlfasermembran oder die aus dem Spülbad gewonnene mindestens eine Hohlfasermembran in die Trocknungseinheit geführt und getrocknet wird, wobei weiter
die Anlage so ausgebildet sein kann, dass die mindestens eine in der Trocknungseinheit getrocknete Hohlfasermembran zu einer Aufnahmeeinheit geleitet und auf einem Träger aufgenommen wird.

Zur Vereinfachung ist in den weiteren Ausführungen unter den Begriffen "mindestens eine Ringspaltdüse" bzw. "eine Ringspaltdüse", "mindestens ein Spinnfaden" bzw. "ein Spinnfaden", "mindestens eine Hohlfasermembran" bzw. "eine Hohlfasermembran", sofern es nicht anders deutlich gemacht ist, immer auch die Mehrzahl der "Ringspaltdüsen", "Spinnfäden" und "Hohlfasermembranen" zu verstehen. Moderne Hohlfaserspinnanlagen können mehr als 1000 oder 2000 Ringspaltdüsen aufweisen.

Die Wandungen der mindestens einen Hohlfasermembran, die unter Verwendung der oben bezeichneten Anlage hergestellt werden kann, ist vorzugsweise porös. Die Poren sowie der Hohlraum, also das Lumen, der Hohlfasermembran werden beim Durchleiten der Hohlfasermembran durch das Fällbad und dem gegebenenfalls vorhandenen Spülbad mit Flüssigkeit, insbesondere Wasser, gefüllt. Die Erfinder haben festgestellt, dass beim Durchlaufen der hergestellten Hohlfasermembran durch den Druckabschnitt der Trocknungseinheit zumindest ein Teil der Flüssigkeit, insbesondere des Wassers, durch den eingestellten atmosphärischen Überdruck aus den Poren der Hohlfasermembran und dem Hohlraum, also dem Lumen, der Hohlfasermembran abgetrennt werden kann. Das Gewicht der flüssigkeitsbeladenen Hohlfasermembran wird dadurch deutlich reduziert. Überraschenderweise war es möglich, die Transportgeschwindigkeit der Hohlfasermembran in der Anlage zur erhöhen, ohne dass dadurch Faserabrisse oder sonstige Schädigungen wie Abflachungen aufgetreten sind. Insbesondere war es auch möglich, die thermische Trocknung bei geringeren Temperaturen oder in geringeren Abschnittslängen der Hohlfasermembranen bei gleichem Trocknungsgrad durchzuführen, so dass insgesamt eine deutliche Energieeinsparung im Herstellprozess der Hohlfasermembranen erzielt werden konnte und eine thermooxidative Schädigung der Hohlfasern verringert wurde. Zudem weisen die mit der erfindungsgemäßen Anlage hergestellten Hohlfasern einen besonders geringen Restgehalt des Lösemittels der Spinnmasse auf.

Unter dem Begriff *"Anlage zur Herstellung mindestens einer Hohlfasermembran"* ist im Sinne der vorliegenden Anmeldung zu verstehen, dass mit der nach Anspruch 1 definierten Anlage eine oder eine Vielzahl von Hohlfasermembranen gleichzeitig hergestellt werden kann. Der Begriff *"Herstellung mindestens einer Hohlfasermembran"* bezeichnet im Sinne der vorliegenden Anmeldung den Prozess des Bildens einer oder mehrerer Spinnfäden aus einer Spinnmasse, das Ausfällen eines oder mehrerer Spinnfäden zu einer oder mehreren Hohlfasermembran/en, sowie gegebenenfalls das Spülen der einen oder der mehreren Hohlfasermembran/en, weiter das Trocknen der einen oder der mehreren Hohlfasermembran/en, sowie gegebenenfalls das Aufnehmen der einen oder der mehreren Hohlfasermembran/en auf einen Träger. Von dem Begriff *"Herstellung"* können auch weitere nicht genannte Zwischenschritte umfasst sein.

Unter dem Begriff *"Spinneinheit"* wird im Sinne der vorliegenden Anmeldung eine Baugruppe verstanden, mit der eine Spinnmasse zu einem Spinnfaden extrudiert wird.

Unter dem Begriff *"Spinnmasse"* wird im Sinne der vorliegenden Anmeldung eine Polymerlösung verstanden, in der mindestens ein Polymer gelöst in einem Lösungsmittel vorliegt. Insbesondere kann im Sinne der vorliegenden Anmeldung eine Spinnmasse eine Polymerlösung aus mindestens einem hydrophoben Polymer und mindestens einem hydrophilen Polymer umfassen. Weiter insbesondere kann es sich bei dem hydrophoben Polymer um ein Polysulfon (PSU) und dem hydrophilen Polymer um Polyvinylpyrrolidon handeln (PVP). Bei dem Lösungsmittel kann es sich um ein polar aprotisches Lösungsmittel, insbesondere um N-Methylpyrrolidon (NMP), N,N-Dimethylacetamid, oder Dimethylsulfoxid (DMSO), handeln. Solche Materialien sind bevorzugt bei der Herstellung von Dialysatoren, wohingegen beispielsweise bei Oxygenatoren sehr hydrophobe Materialien wie Polypropylen (PP) oder Polymethylpenten (PMP) Verwendung finden.

Unter dem Begriff *"Spinnfaden"* wird im Sinne der vorliegenden Anmeldung ein aus der Spinnmasse extrudierter Faden verstanden, der noch nicht die poröse Struktur der herzustellenden Hohlfasermembran angenommen hat. Insbesondere wird im Sinne der vorliegenden Anmeldung die zum Faden extrudierte Spinnmasse im *"Fällspalt"* vor ihrem Einleiten in das Fällbad als Spinnfaden bezeichnet. Als *"Fällspalt"* wird dabei die Wegstrecke des Spinnfadens von seiner Extrusion bis zum Eintritt ins Fällbad verstanden. Die Geschwindigkeit mit der der Spinnfaden den Fällspalt durchläuft wird im Sinne der vorliegenden Anmeldung als *"Abzugsgeschwindigkeit"* bezeichnet. Die *"Transportgeschwindigkeit"* wird an die Abzugsgeschwindigkeit angepasst oder kann leicht oberhalb der Abzugsgeschwindigkeit liegen, um eine straffe Führung der Hohlfasermembran durch die Anlage zu gewährleisten. Bei einer Erhöhung der Transportgeschwindigkiet wird demnach auch die Abzugsgeschwindigkeit erhöht.

Die Spinneinheit weist eine oder eine Mehrzahl von Ringspaltdüsen auf. Unter dem Begriff *"Ringspaltdüse"* wird im Sinne der vorliegenden Anmeldung eine Extrusionsdüse verstanden, mit der die Spinnmasse zu einem hohlen Spinnfaden extrudiert werden kann. Die Ringspaltdüse weist eine zentrale Bohrung auf, durch die das Koagulationsmedium extrudiert werden kann. Weiterhin weist die Ringspaltdüse konzentrisch zu der zentralen Bohrung einen Ringspalt auf, durch den die Spinnmasse extrudiert wird. Entsprechende Ringspaltdüsen sind im Stand der Technik bekannt. Unter einer Ringspaltdüse werden auch solche Extrusionsdüsen verstanden, die mehrere Ringspalte konzentrisch zu der zentralen Bohrung aufweisen.

Die Spinneinheit weist weiter Zuführkanäle auf, um die Quelle der Spinnmasse mit dem oder den konzentrisch angeordneten Ringspalt/en der Ringspaltdüse und die Quelle des Koagulationsmediums mit der zentralen Bohrung der Ringspaltdüse fluidisch zu verbinden. Spinnmasse und Koagulationsmedium werden durch die Ringspaltdüse zu dem hohlen Spinnfaden co-extrudiert, wobei der Hohlraum des Spinnfadens mit dem Koagulationsmedium gefüllt ist.

Als *"Koagulationsmedium"* wird im Sinne der vorliegenden Anmeldung ein flüssiges Medium verstanden, das in Kontakt mit der Innenseite des hohlen Spinnfadens eine Phaseninversion der Spinnmasse in dem Spinnfaden bewirkt. Für das in der vorliegenden Anmeldung beschriebene Verfahren wird ein Koagulationsmedium gewählt, das aus einem Gemisch eines aprotischen polaren Lösungsmittels und einem polaren protischen Lösungsmittel besteht. In besonderen Ausführungen gemäß der vorliegenden Erfindung besteht das Koagulationsmedium aus N-Methylpyrrolidon (NMP), N,N Dimethylacetamid oder Dimethylsulfoxid (DMSO) und Wasser. Eine mit diesen Koagulationsmedium eingeleitete Koagulation des Spinnfadens wird auch als "non-solvent-induced phase separation" (NIPS) bezeichnet. Weiterhin kann im Sinne der vorliegenden Anmeldung eine Koagulation des Spinnfadens auch durch ein "temperature- induced phase separation" (TIPS) Verfahren eingeleitet werden. Die Phaseninversion und Koagulation des Spinnfadens wird dabei durch eine Temperaturabsenkung eingeleitet.

Unter dem Begriff *"Fällbad"* wird im Sinne der vorliegenden Anmeldung eine bauliche Einheit verstanden, die ein Reservoir eines Fällmediums aufweist, in das der extrudierte Spinnfaden eingeleitet wird. In dem Fällbad wird der Spinnfaden ausgefällt, wobei die koagulierte Struktur des Spinnfadens zu einer porösen Hohlfasermembran weiter verfestigt wird. Als "Fällmedium" wird gemäß der vorliegenden Erfindung bevorzugt ein polar protisches Lösungsmittel, insbesondere Wasser, verwendet. Es kann aber auch alternativ oder in Mischungen Alkohole oder andere protische Flüssigkeiten enthalten. Das Fällmedium kann darüber hinaus einen Anteil eines polaren aprotischen Lösungsmittels enthalten. Die Poren und der Hohlraum der Hohlfasermembran sind, nachdem die Hohlfasermembran das Fällbad durchlaufen hat, mit Flüssigkeit gefüllt.

Unter dem Begriff *"Spüleinheit"* wird eine bauliche Einheit verstanden, die ein Reservoir einer Spülflüssigkeit aufweist, in das die aus dem Fällbad erhaltene Hohlfasermembran eingeleitet wird. Die Hohlfasermembran wird dabei von restlichem Lösungsmittel und anhaftenden Polymeranteilen befreit, die nach dem Fällbad noch an der Hohlfasermembran anhaften können. Als Spülflüssigkeit wird im Rahmen der vorliegenden Erfindung bevorzugt Wasser verwendet. Die Spüleinheit kann aber auch eine Anzahl mehrerer Reservoirs aufweisen, die verschiedene Spülflüssigkeiten enthalten. Nachdem die Hohlfasermembran die Spüleinheit durchlaufen hat, sind deren Poren und der Hohlraum mit Flüssigkeit, insbesondere mit Wasser, gefüllt.

Unter dem Begriff *"Trocknungseinheit"* wird eine bauliche Einheit verstanden, die einen Raum aufweist, in den die Hohlfasermembran eingeleitet wird und in dem sie getrocknet werden kann. Bevorzugt wird durch die Trocknungseinheit die aus dem Fällbad oder gegebenenfalls aus dem Spülbad erhaltene, mit Flüssigkeit, insbesondere Wasser, gefüllte, Hohlfasermembran bis zu einem Restflüssigkeitsgehalt von weniger als 10 Gew.-%, weiter bevorzugt weniger als 3 Gew.-% bezogen auf das Gesamtgewicht der Faser getrocknet. Die Trocknungseinheit kann einen Raum aufweisen, in den die Hohlfasermembran eingeleitet wird und in dem über Umlenkrollen und Führungsmittel eine zu durchlaufende Wegstrecke für die Hohlfasermembran vorgegeben wird, so dass die Hohlfasermembran abhängig von der Transportgeschwindigkeit eine vorgegebene Zeit in (dem Raum) der Trocknungseinheit verweilt.

Unter dem Begriff "Aufnahmeeinheit" wird eine Vorrichtung verstanden, die einen Träger umfasst, der dafür vorbereitet ist, die Hohlfasermembran aufzunehmen. Insbesondere kann es sich bei diesem Träger um eine Haspel, eine Trommel, einen Wickler, oder eine Rolle handeln.

Unter dem Begriff *"Druckabschnitt"* wird im Sinne der vorliegenden Anmeldung eine bauliche Einheit in der Trocknungseinheit verstanden, in dem relativ zum Umgebungsdruck der Anlage nach Anspruch 1 ein Überdruck eingestellt werden kann. Der Begriff *"Überdruck"* bezieht sich auf den Normalatmosphärendruck von 1013,25 hPa und bezeichnet im Kontext der vorliegenden Anmeldung einen Druck oberhalb des Normalatmosphärendrucks.

Der Fachmann kennt weitere Details einer Anlage zur Herstellung einer Hohlfasermembran. Insbesondere ist dem Fachmann bekannt, dass eine Anlage zur Herstellung von Hohlfasermembranen Mittel zur Führung des Spinnfadens und der Hohlfasermembran aufweist, um den Spinnfaden durch das Fällbad zu leiten sowie um die daraus erhaltene Hohlfasermembran durch das Fällbad, das Spülbad, die Trocknungseinheit und zur Aufnahmeeinheit zu transportieren. Dem Fachmann sind in diesem Zusammenhang entsprechende Führungsrollen, Führungsrechen oder Leitbleche bekannt.

Weiterhin sind dem Fachmann entsprechende Verfahrensparameter und Spinnbedingungen bekannt, die das Extrudieren der Spinnmasse und die Bildung der Hohlfasermembran beeinflussen. Insbesondere ist dem Fachmann bekannt, dass die Temperatur der Ringspaltdüsen, die relative Atmosphärenfeuchtigkeit im Fällspalt, die Höhe des Fällspaltes, die Zusammensetzung der Spinnmasse und des Koagulationsmediums sowie die Temperatur des Fällbades auf die Bildung der Membranstruktur der Hohlfasermembran, z.B. deren Porosität und deren Trenneigenschaften, Einfluss nehmen. Die Verfahrensparameter für ein TIPS- Verfahren sind beispielsweise aus der WO17184817A1 bekannt.

Die Erfindung ist dadurch gekennzeichnet, dass der Druckabschnitt der Trocknungseinheit, eine Druckkammer aufweist, die einen Innenraum, einen Einlass zum Einleiten der mindestens einen Hohlfasermembran in den Innenraum der Druckkammer, einen Auslass zum Ausleiten der mindestens einen Hohlfasermembran aus dem Innenraum der Druckkammer und mindestens einen Gaseinlass aufweist, wobei der mindestens eine Gaseinlass in Fluidverbindung mit mindestens einer Gasquelle steht und der Druckabschnitt weiter so ausgebildet ist, dass ein Überdruck über die Gasquelle im Innenraum der Druckkammer erzeugt werden kann.

Gemäß dieser Ausführungsform kann ein Überdruck angelegt werden, der besonders effektiv auf die durch die Druckkammer geführten Hohlfasermembranen einwirken kann. Die Druckkammer kann z.B. als Kanal ausgebildet sein, der z.B. rohrförmig oder spaltförmig ausgebildet ist, und in den das Gas zur Einstellung des Überdrucks eingeleitet wird. Gemäß der Erfindung ist der Innendurchmesser der Druckkammer nicht konstant, sondern z.B. gegenüber dem Einlass und dem Auslass der Druckkammer vergrößert. Es ist vorgesehen, dass die mindestens eine Hohlfasermembran oder eine Schar von Hohlfasermembranen durch die Druckkammer geführt wird und durch den eingestellten Überdruck wenigstens ein Teil des in den Hohlfasermembranen transportierten Wassers entfernt wird. Der Überdruck kann dabei durch den Zustrom eines Gases, das durch den Gaseinlass in die Druckkammer strömt, eingestellt werden. Besonders effektiv ist die Entfernung von Wasser, wenn es zu einem Austrag von Flüssigkeit, insbesondere Wasser aus der Druckkammer kommt, insbesondere entgegen der Förderrichtung der Hohlfasermembran, so dass aus den Hohlfasermembranen abgetrenntes Wasser aus dem Einlass der Druckkammer abgelassen werden kann.

Der Begriff *"Druckkammer"* bezeichnet im Sinne der vorliegenden Anmeldung einen umgrenzten Raum, in dem ein gegenüber dem Umgebungsdruck erhöhter Druck eingestellt werden kann. Im Sinne der vorliegenden Anmeldung weist die Druckkammer eine Einlassöffnung und eine Auslassöffnung zur Durchleitung der Hohlfasermembranen auf.

Unter dem Begriff *"Gasquelle"* wird eine Anlage verstanden, die Gas in einem Überdruck relativ zur Umgebungsatmosphäre bereitstellen kann. Insbesondere kann eine Gasquelle im Sinne der vorliegenden Anmeldung ein Druckgasbehälter, z.B. eine Gasflasche, sein. Alternativ kann die Gasquelle aber auch ein Kompressor sein, mit dem Druckluft bereitgestellt wird. Das in die Druckkammer eingeleitete Gas kann gemäß der beschriebenen Ausführung durch den Einlass und den Auslass der Druckkammer entweichen.

Unter dem Begriff "Fluidverbindung" wird eine Verbindung verstanden, mit der Gas von der Gasquelle zum Gaseinlass der Druckkammer geführt werden kann. Bei derartigen Fluidverbindungen kann es sich um Rohre oder Schläuche handeln.

Eine weitere Ausführungsform des ersten Aspekts der Erfindung ist dadurch gekennzeichnet, dass die Anlage so ausgebildet ist, dass der Druck in dem Druckabschnitt der Trocknungsanlage 1100 hPa bis 10.000 hPa, oder 1200 hPa bis 5000 hPa, oder 1200 hPa bis 4000 hPa beträgt. Es hat sich gezeigt, dass je nach Membranporosität und Trenneigenschaft der Druck in diesem Bereich optimal eingestellt werden kann und so eine gute Flüssigkeitsentfernung bewerkstelligt wird.

Eine weitere Ausführungsform des ersten Aspekts der Erfindung ist dadurch gekennzeichnet, dass die Querschnittsfläche des Einlasses zum Einleiten der mindestens einen Hohlfasermembran in den Innenraum der Druckkammer und des Auslasses zum Ausleiten der mindestens einen Hohlfasermembran aus der Druckkammer kleiner als das 30-fache, vorzugsweise kleiner als das 20-fache, weiter bevorzugt kleiner als das 10-fache, weiter bevorzugt kleiner als das 5-fache der Querschnittsfläche der einen Hohlfasermembran oder der summierten Querschnittsflächen der mehreren Hohlfasermembranen ist. Nach einer Ausführungsform ist die Querschnittsfläche des Einlasses größer als das 1,1-fache, oder das 2-fache oder das 3-fache der Querschnittsfläche der einen Hohlfasermembran oder der summierten Querschnittsflächen der mehreren Hohlfasermembranen

Über die Größe des Querschnitts des Einlasses und des Auslasses der Druckkammer kann der Druckaufbau, abhängig von der Anzahl der Hohlfasermembranen, die durch die Druckkammer geleitet werden, eingestellt werden. Ist die Querschnittsfläche von Einlass und Auslass dabei zu gering, ist die Führung der Hohlfasermembranen durch die Druckkammer erschwert. Dies kann der Fall sein, wenn die Querschnittsfläche des Einlasses oder Auslasses weniger als das 1,1-fache der Querschnittsfläche der einen Hohlfasermembran oder der summierten Querschnittsflächen der mehreren Hohlfasermembranen ist. Ist die Querschnittsfläche zu hoch, wird die Einstellung des Überdrucks erschwert und die Menge an Gas, die nötig ist, um einen gewünschten Gasdruck zu erreichen, erhöht.

Einlass und Auslass der Druckkammer können dabei so ausgestaltet sein, dass bis zu 128 Fasern durch die Druckkammer geführt werden können. Wird eine größere Anzahl an Hohlfasermembranen durch die Druckkammer geführt, ist eine teilweise Flüssigkeitsentfernung, insbesondere Wasserentfernung, der innenliegenden Fasern der Schar von Hohlfasermembranen erschwert. Bevorzugt wird eine Schar von 2 bis 64 Hohlfasermembranen, in alternativen Ausführungen eine Schar von 5 bis 32 Hohlfasermembranen, in einer weiter alternativen Ausführung eine Schar von 10 bis 20 Hohlfasermembranen, durch die Druckkammer geführt. Sofern es erforderlich ist, an einer noch größeren Anzahl von Hohlfasermembranen gleichzeitig eine Flüssigkeitsentfernung durch einen Überdruck einer Gasatmosphäre zu bewirken, können mehrere Druckkammern gleichzeitig und parallel in der Anlage zur Herstellung der Hohlfasermembranen angeordnet werden.

Eine weitere Ausführungsform des ersten Aspekts der Erfindung ist dadurch gekennzeichnet, dass die Trocknungseinheit einen Temperierungsabschnitt aufweist, der eine Heizvorrichtung aufweist, die so ausgebildet ist, dass in dem Temperierungsabschnitt eine Temperatur von 50 bis 230°C eingestellt werden kann.

Es hat sich gezeigt, dass eine Trocknungseinheit, die eine Kombination aus einem Druckabschnitt und einem Temperierungsabschnitt aufweist, besonders effektiv und effizient für die Trocknung der Hohlfasermembran ist. Insbesondere ist gemäß dieser Ausführungsform vorgesehen, dass eine teilweise Entfernung der Flüssigkeit, insbesondere des Wassers, aus der Hohlfasermembran durch den Druckabschnitt bewirkt wird. Dadurch kann die Faser effizienter in dem Temperierungsabschnitt getrocknet werden, weil heiße Luft in die Poren und den Hohlraum der Hohlfasermembran eindringen kann.

Der Begriff *"Temperierungsabschnitt"* bezeichnet dabei einen Abschnitt der Trocknungseinheit, in dem die Temperatur auf zwischen 50 und 230°C eingestellt ist. Der Temperaturbereich ist dabei so zu wählen, dass die Hohlfasermembran nicht geschädigt wird, andererseits aber auch eine ausreichende Trocknung der Hohlfasermembranen bewirkt werden kann. Diesbezüglich sind insbesondere Temperaturbereiche von 70°C oder darüber, oder 90°C oder darüber, oder 110°C oder darüber und 210°C und darunter, oder 190°C und darunter, oder 170°C und darunter, insbesondere 70°C bis 210°C, oder 90°C bis 190°C, oder 110°C bis 170°C für die Trocknung der Hohlfasermembranen in dem Trocknungsabschnitt vorgesehen. Alternativ kann auch eine Trocknung bei Temperaturen von 170°C bis 230°C vorgesehen sein, was eine besonders schnelle Trocknung bewirkt.

Eine weitere Ausführungsform des ersten Aspekts der Erfindung ist dadurch gekennzeichnet, dass der Temperierungsabschnitt der Trocknungseinheit eine Temperierungskammer aufweist, die einen Einlass zum Einleiten der mindestens einen Hohlfasermembran und einen Auslass zum Ausleiten der mindestens einen Hohlfasermembran aufweist.

Eine weitere Ausführungsform des ersten Aspekts der Erfindung ist dadurch gekennzeichnet, dass die Druckkammer und die Temperierungskammer separate Kammern sind, und die Anlage weiter so ausgebildet ist, dass die aus dem Fällbad oder gegebenenfalls die aus dem Spülbad erhaltene mindestens eine Hohlfasermembran zuerst durch die Druckkammer und anschließend durch die Temperierungskammer geführt wird. Eine Separierung von Druck- und Trocknungskammer hat den Vorteil, dass bereits in der vorgeschalteten Druckkammer Flüssigkeit entfernt werden kann, ohne dass diese verdampft werden muss. Die Flüssigkeit kann dann zurück in das Spülbad geleitet werden, was den Flüssigkeitsverbrauch im Spülbad senkt, oder separat aufgefangen und wiederverwendet werden. Nach dem Eintritt in die Trockenkammer muss bedeutend weniger Flüssigkeit verdampft werden, was den Trocknungsprozess beschleunigt und/oder den Energieverbrauch durch eine Absenkung der benötigten Verdampfungsenthalpie senkt.

Eine weitere Ausführungsform des ersten Aspekts der Erfindung ist dadurch gekennzeichnet, dass die Druckkammer des Druckabschnitts in mehrere Kompartimente unterteilt ist. Vorteilhafterweise können in den unterschiedlichen Kompartimenten der Druckkammer verschiedene Drücke eingestellt werden. Gemäß dieser Ausführungsform kann ein Druckgradient über die mehreren Kompartimente in der Druckkammer erzeugt werden. Der Druckgradient bewirkt einen besonders effizienten Austrag von Flüssigkeit, insbesondere von Wasser, aus der Druckkammer und damit eine effiziente Flüssigkeitsentfernung aus der mindestens einen Hohlfasermembran.

Gemäß dieser Ausführungsform ist an mindestens einem Kompartiment der Druckkammer der Gaseinlass angeordnet. An weiteren Kompartimenten der Druckkammer können Wasserauslässe zum Abführen des aus den Hohlfasermembranen abgetrennten Wassers angeordnet sein. Ein Kompartiment kann innerhalb der Druckkammer durch geeignete geometrische Ausführungen des Innenraums der Druckkammer gebildet werden und von einem anderen Kompartiment abgetrennt sein. Es kann vorgesehen sein, dass die Kompartimente durch Trennwände voneinander getrennt sind. Der Begriff "trennen" bedeutet in diesem Zusammenhang, dass sich in den Kompartimenten unterschiedliche Drücke einstellen und somit ein erster Druck in einem ersten Kompartiment von einem zweiten Druck in einem zweiten Kompartiment der Druckkammer unterscheidet. Die Kompartimente sind zum zentralen Durchführungsbereich der Hohlfasermembranen zu den Hohlfasermembranen geöffnet.

Gemäß Erfindung ist die lichte Weite des Innenraums der Druckkammer im Querschnitt parallel zur Laufrichtung der Hohlfasermembran derart ausgestaltet, dass sie mindestens eine Querschnittsvergrößerung und mindestens eine Querschnittsverkleinerung aufweist, wobei die Querschnittsvergrößerung und die Querschnittsverkleinerung vorzugsweise eine Konusform der Innenseite der Druckkammer bilden.

Die konusförmige Innenseite der Druckkammer hat den Vorteil, dass aus den Hohlfasermembranen abgeschiedenes Wasser besonders effektiv abtransportiert werden kann. Durch den effektiven Abtransport des Wassers ist es möglich, die Gesamtlänge der Druckkammer in Faserrichtung bei unter 50 cm, bevorzugt bei unter 20 cm, weiter bevorzugt bei unter 12 cm zu belassen, was eine kompaktere Bauweise der Anlage zur Herstellung der Hohlfasermembranen ermöglicht. Gemäß einer besonderen Ausführungsform ist die Gesamtlänge der Druckkammer mindestens 5 cm.

Gemäß einer bevorzugten Ausführungsform schließen sich im Inneren der Druckkammer mehrere Querschnittsvergrößerungen und -verkleinerungen aneinander an, so dass mehrere Kompartimente mit einem konusförmigen Abschnitt im Innenraum der Druckkammer ausgebildet werden.

Eine weitere Ausführungsform des ersten Aspekts der Erfindung ist dadurch gekennzeichnet, dass der mindestens eine Gaseinlass der Druckkammer an einem Querschnittsmaximum der lichten Weite des Innenraums der Druckkammer angeordnet ist, bevorzugt zwischen dem Einlass zum Einleiten und dem Auslasses zum Ausleiten der mindestens einen Hohlfasermembran an der Druckkammer mittig angeordnet ist. Diese Ausführungsform erleichtert das Durchströmen des Gases zu dem Ein- und Auslass des Hohlfadens bzw. der Hohlfäden hin.

Eine weitere Ausführungsform des ersten Aspekts der Erfindung ist dadurch gekennzeichnet, dass die Druckkammer einen oder mehrere Auslässe für das Ablassen von Flüssigkeit, insbesondere Wasser, aufweist, wobei die Auslässe vorzugsweise an einem Querschnittsmaximum der lichten Weite des Innenraums der Druckkammer angeordnet sind. Über die Auslässe kann die aus der mindestens einen Hohlfasermembran abgetrennte Flüssigkeit, insbesondere Wasser, aus dem Innenraum der Druckkammer ausgeleitet werden. Dadurch verbessert sich die Effizienz der Trocknung in der Druckkammer, da die Flüssigkeit besonders schnell und effizient abgeleitet werden kann.

Eine weitere Ausführungsform des ersten Aspekts der Erfindung ist dadurch gekennzeichnet, dass die Druckkammer Ein- und Auslässe für den oder die Hohlfäden aufweist, wobei sich an den Einlass eine trichterförmige Öffnung anschließt. Dadurch werden die Hohlfasermembran oder die Schar von Hohlfasermembranen beim Einleiten in die Druckkammer geschont. Es kann auch vorgesehen sein, dass der Auslass eine trichterförmige Öffnung aufweist. Bevorzugt sind alle Kanten, insbesondere alle Kanten des Einlasses, gerundet.

Insbesondere ist in einer Ausführungsform des ersten Aspekts der Erfindung die Anlage zur Herstellung der mindestens einen Hohlfasermembran dadurch gekennzeichnet, dass sie dazu ausgebildet ist eine "high-flux Hohlfasermembran, eine "mid cut-off" Hohlfasermembran, eine "high cut-off" Hohlfasermembran oder Hohlfasermembranen für die Blutplasmatrennung für die extrakorporale Blutbehandlung herzustellen.

Der Ausdruck "high-flux", wie er hier verwendet wird, bezieht sich auf Hohlfasermembranen mit einem Beginn einer molekulargewichtsabhängigen Retention (molecular weight retention onset", "MWRO") zwischen 5 kDa und 10 kDa und einer molekulargewichtsabhängigen Ausschlussgrenze (molecular weight cut off, "MWRO") zwischen 25 kDa und 65 kDa, wie sie durch Dextran-Siebkoeffizientenmessung gemäß Boschetti et al. (2013) bestimmt werden kann. Der durchschnittliche Porenradius liegt im Bereich von 3,5 bis 5,5 nm, wobei die Porengröße durch den MWCO auf der Grundlage der Dextran-Siebkoeffizienten gemäß Boschetti-de-Fierro et al. (2013) und Granath et al. (1967), sowie der Analyse der Molekulargewichtsverteilung durch Gelchromatographie an Sephadex. J Chromatogr A. 1967; 28 (C): 69-81 bestimmt wird. Der Hauptunterschied zwischen "high-flux" Membranen und "low-flux" Membranen besteht in einer höheren Wasserpermeabilität und der Fähigkeit, kleine bis mittlere Moleküle wie β2-Mikroglobulin zu entfernen.

Der Ausdruck "Mid-cut-off" Membranen wird für Membranen verwendet, deren Trenneigenschaften zwischen denen der High-flux und denen der High-cut-off-Membranen liegen. "Low-flux" Membranen weisen Trenneigenschaften auf, die durch eine steilere Siebkurve als die der High-Flux- Membranen charakterisiert sind.

Der hier verwendete Ausdruck "high cut-off" bezieht sich auf Hohlfasermembranen mit einem MWRO zwischen 15 und 20 kDa und einem MWCO zwischen 170 und 320 kDa. Die Hohlfasermembranen sind durch einen Porenradius auf der Oberfläche der selektiven Schicht zwischen 8 und 12 nm charakterisiert. Die Bestimmung des MWRO und MWCO der hier bezeichneten "high-cut off" Hohlfasermembran wird gemäß den Verfahren von Boschetti-de-Fierro et al. (2013) bestimmt.

Hohlfasermembranen für die Blutplasmatrennung sind dadurch gekennzeichnet, dass ihr MWCO oberhalb dem für "high cut-off" Hohlfasermembranen definierten Wert liegt. Insbesondere ist die Porengröße von Hohlfasermembranen für die Blutplasmatrennung so beschaffen, dass nur zelluläre Bestandteile des Blutes von der Membran zurückgehalten werden.

"High-flux" Hohlfasermembranen, "mid cut-off" Hohlfasermembranen, "high cut-off" Hohlfasermembranen oder Hohlfasermembranen für die Blutplasmatrennung lassen sich besonders gut nach dem gemäß dem zweiten Aspekt beschriebenen herstellen. Die genannten Hohlfasermembranen weisen eine hohe Flüssigkeitspermeabilität, insbesondere eine hohe Wasserpermeabilität auf, so dass die Entfernung von Flüssigkeit, insbesondere Wasser, aus der Hohlfasermembran in der Druckkammer besonders effektiv erfolgen kann. Dies gilt insbesondere für die "high cut-off" Hohlfasermembranen mit einem MWRO von 10 - 20 kDa.

Erfindungsgemäß können auch zwei oder mehr Druckkammern hintereinander geschaltet sein. Dies ist immer dann von besonderem Vorteil, wenn in der ersten Druckkammer nur ein vergleichsweise geringer Teil der Flüssigkeit entfernt werden kann. Dies kann beispielsweise bei der Herstellung von "low-flux" Hohlfasermembranen erforderlich sein, die aufgrund ihres geringen Porendurchmessers einen erhöhten Trocknungsaufwand erfordern.

In einem zweiten Aspekt betrifft die Erfindung ein Verfahren zur Herstellung einer oder mehrerer Hohlfasermembran/en gemäß Anspruch 10, aufweisend die Schritte Bereitstellen einer Quelle einer Spinnmasse, Bereitstellen einer Quelle für ein Koagulationsmedium, Co-Extrudieren der Spinnmasse und des Koagulationsmediums durch mindestens eine Ringspaltdüse zu mindestens einem hohlen Spinnfaden, dessen Hohlraum mit dem Koagulationsmedium gefüllt ist, Einleiten des mindestens einen Spinnfadens in ein Fällbad, enthaltend ein Fällmittel, und Ausfällen des mindestens einen Spinnfadens zu mindestens einer Hohlfasermembran, gegebenenfalls anschließendes Einleiten der mindestens einen Hohlfasermembran in ein Spülbad, enthaltend ein Spülmittel, Einleiten der aus dem Fällbad erhaltenen mindestens einen Hohlfasermembran oder Einleiten der gegebenenfalls aus dem Spülbad erhaltenen mindestens einen Hohlfasermembran in eine Trocknungseinheit, gegebenenfalls Aufnehmen der aus der Trocknungseinheit gewonnenen mindestens einen Hohlfasermembran auf einen Träger, wobei die mindestens eine Hohlfasermembran in der Trocknungseinheit einen Druckabschnitt durchläuft, in dem durch Einleiten eines Gases in den Druckabschnitt ein atmosphärischer Überdruck erzeugt wird und in dem zumindest ein Teil des in der mindestens einen Hohlfasermembran enthaltenen Fällmittels oder Spülmittels aus der mindestens einen Hohlfasermembran abgetrennt wird, wobei der Druckabschnitt der Trocknungseinheit, eine Druckkammer aufweist, und die mindestens eine Hohlfasermembran durch einen Einlass in einen Innenraum der Druckkammer eingeleitet wird, wobei die lichte Weite des Innenraums der Druckkammer im Querschnitt parallel zur Laufrichtung der mindestens einen Hohlfasermembran mindestens eine Querschnittsvergrößerung und mindestens eine Querschnittsverkleinerung aufweist, wobei die Querschnittsvergrößerung und Querschnittsverkleinerung vorzugsweise eine Konusform der Innenseite der Druckkammer bilden, und die Hohlfasermembran durch einen Auslass aus dem Innenraum der Druckkammer ausgeleitet wird.

Dem Fachmann sind die prinzipiellen Vorgehensweisen und die Details eines Verfahrens zur Herstellung einer Hohlfasermembran bekannt. Insbesondere ist bekannt, dass in einem Verfahren zur Herstellung von Hohlfasermembranen Mittel zur Führung des Spinnfadens und der Hohlfasermembran dazu dienen, den Spinnfaden durch das Fällbad und aus diesem heraus zu leiten und anschließend zum Spülbad, der Trocknungseinheit und zur Aufnahmeeinheit zu transportieren. Dem Fachmann sind in diesem Zusammenhang entsprechende Führungsrollen, Führungsrechen, Leitbleche oder Ondulierungswerkzeuge bekannt, mit dem das erfindungsgemäße Verfahren durchführbar ist.

Weiterhin sind dem Fachmann die Verfahrensparameter und Spinnbedingungen für das Extrudieren der Spinnmasse und die Bildung der Hohlfasermembran bekannt. Insbesondere ist dem Fachmann bekannt, dass die Temperatur der Ringspaltdüsen, die relative Atmosphärenfeuchtigkeit im Fällspalt, die Höhe des Fällspaltes, die Zusammensetzung der Spinnmasse und des Koagulationsmediums sowie die Temperatur des Fällbades auf die Bildung der Membranstruktur der Hohlfasermembran, z.B. deren Porosität, Einfluss nehmen. Insbesondere ist das Verfahren gemäß dem zweiten Aspekt dazu geeignet, Hohlfasermembranen für die Nano-, Ultra und Mikrofiltration herzustellen. Bevorzugt erfolgt die Koagulation des Spinnfadens nach dem Prinzip der "non-solvent induced phase separation" (NIPS). Alternativ kann die Koagulation des Spinnfadens auch nach einer "temperature induced pahse separation" (TPIS) gesteuert werden. TIPS Verfahren mit hydrophoben Polymeren eigenen sich besonders für die Separation von Gasen, insbesondere bei Oxygenatoren, dies gilt insbesondere für das Polymer PMP (Polymethylpenten) und Polypropylen (PP).

Eine weitere Ausführungsform des zweiten Aspekts der Erfindung ist dadurch gekennzeichnet, dass ein Ondulierungswerkzeug nach der Trocknungseinheit und gegebenenfalls vor der Aufnahmeeinheit angeordnet ist. Unter einem "Ondulierungswerkzeug" wird im Zusammenhang der vorliegenden Anmeldung ein Werkzeug verstanden, mit der die Hohlfasermembran zu einer wellenförmigen geometrischen Ausgestaltung geformt werden kann. Entsprechende Werkzeuge sind im Stand der Technik bekannt, es wird insbesondere auf die in der DE 10 2017 204 524 A1 offenbarten Ausführungen verwiesen

Das Verfahren gemäß dem zweiten Aspekt ist für die Herstellung einer Hohlfasermembran geeignet. Das Verfahren ist gleichermaßen dazu geeignet, eine Schar von (mehreren) Hohlfasermembranen gleichzeitig herzustellen. In diesem Fall werden Spinnmasse und Koagulationsmedium über eine Vielzahl von Ringspaltdüsen, die in der Spinneinheit angeordnet sind, zu einer Schar von Spinnfäden extrudiert, die analog dem erfindungsgemäßen Verfahren zu getrockneten Hohlfasermembranen weiterverarbeitet werden. Insbesondere kann die Anlage zu Herstellung der Hohlfasermembranen so ausgelegt sein, dass von 1 bis 64 Hohlfasermembranen, oder 5 bis 32 Hohlfasermembranen, oder 10 bis 20 Hohlfasermembranen oder bis zu 128 Hohlfasermembranen gleichzeitig hergestellt werden können.

Wie bereits vorab beschrieben wurde, wird eine Hohlfasermembran im Herstellverfahren beim Durchleiten durch das Fällbad und dem gegebenenfalls vorhandenen Spülbad mit Flüssigkeit, insbesondere mit Wasser, gefüllt. Das Gewicht der Hohlfasermembran kann im Herstellverfahren durch den Druckabschnitt der Trocknungseinheit deutlich reduziert werden. Insbesondere wird es dadurch möglich, die Transportgeschwindigkeit der Hohlfasermembran in der Anlage zur Herstellung der Hohlfasermembran zu erhöhen, ohne dass dadurch Faserabrisse oder sonstige Faserschädigungen wie Abflachungen auftreten. Insbesondere ist es auch möglich, eine thermische Trocknung bei geringerer Temperatur oder in verringerter Wegstrecke bei gleichem Trocknungsgrad durchzuführen, so dass insgesamt eine deutliche Energieeinsparung im Herstellprozess erzielt werden kann und / oder eine thermooxidative Schädigung der Hohlfaser zu verringern oder zu vermeiden. Zudem weisen die erfindungsgemäß hergestellten Hohlfasern einen besonders geringen Gehalt des Lösemittels der Spinnmasse auf.

Eine weitere Ausführungsform des zweiten Aspekts der Erfindung ist dadurch gekennzeichnet, dass der atmosphärische Überdruck im Druckabschnitt auf einen Druck von 1100 hPa bis 10.000 hPa, oder 1200 bis 5000 hPa, oder 1200 bis 4000 hPa eingestellt wird. Die angegebenen Druckbereiche haben sich als vorteilhaft erwiesen, um das in den Poren und im Hohlraum der Hohlfasermembranen enthaltene Wasser zumindest teilweise während des Herstellverfahrens zu entfernen.

Eine weitere Ausführungsform des zweiten Aspekts der Erfindung ist dadurch gekennzeichnet, dass das Gas ausgewählt wird aus der Gruppe bestehend aus Luft, Stickstoff, Argon Kohlendioxid, Wasserdampf oder Gemischen davon. Diese Gase haben sich als vorteilhaft erwiesen, da sie gegenüber den Materialien der Hohlfasermembran inert sind. Bevorzugte Gase sind Stickstoff und synthetische Luft.

Eine weitere Ausführungsform des zweiten Aspekts der Erfindung ist dadurch gekennzeichnet, dass der Druckabschnitt auf 30 bis 125 °C, vorzugsweise 30 bis 110 °C, weiter vorzugsweise 30 bis 90°C temperiert wird. Bei erhöhten Temperaturen im Druckabschnitt wurde eine verbesserte Abtrennung von Wasser aus der Hohlfasermembran beobachtet. Insbesondere kann bei Temperaturen oberhalb von 100 °C die Hohlfasermembran teilweise sterilisiert werden. In diesem Fall ist es vorteilhaft, in dem Druckabschnitt eine Wasserdampfatmosphäre bei Überdruck und 120°C einzustellen.

Eine weitere Ausführungsform des zweiten Aspektes der Erfindung ist dadurch gekennzeichnet, dass ein Teil des Gases, mit welchem die Druckkammer beaufschlagt wird, in der Spüleinheit, insbesondere im Spülbad, austritt. Dies wird in Abhängigkeit vom Typ der Hohlfasermembran und der Geometrie der Druckkammer dadurch erfindungsgemäß geregelt, dass der Gasdruck eingestellt wird, bis hinreichend Gasbläschen im Spülbad austreten. Dann ist sichergestellt, dass eine besonders effektive Flüssigkeitsentfernung gewährleistet ist.
Eine weitere Ausführungsform des zweiten Aspektes ist dadurch gekennzeichnet, dass die Transportgeschwindigkeit der Hohlfasermembran 550 mm/ s bis 1000 mm/s, bevorzugt über 650 mm/s bis 900 mm/s, weiter bevorzugt 750 mm/s bis 800 mm/s beträgt.

Gemäß einer weiteren Ausführungsform des zweiten Aspektes ist die hergestellte Hohlfasermembran eine "high-flux", eine "mid-cut-off, eine "high cut-off" Hohlfasermembran, oder eine Hohlfasermembran für die Blutplasmatrennung.

Gemäß einer weiteren Ausführungsform des zweiten Aspektes der Erfindung wird in der Druckkammer der überwiegende Teil, besonders bevorzugt mehr als 75% oder mehr als 90%, der Flüssigkeit aus den Poren und dem Hohlraum, also dem Lumen, der Membran entfernt. Somit ist eine effiziente Flüssigkeitsentfernung gewährleistet.

In einem dritten Aspekt betrifft die Erfindung ein Verfahren zur Herstellung einer oder mehrerer Hohlfasermembran/en, aufweisend die Schritte
Bereitstellen einer Quelle einer Spinnmasse,
Bereitstellen einer Quelle für ein Koagulationsmedium,
Co-Extrudieren der Spinnmasse und des Koagulationsmediums durch mindestens eine Ringspaltdüse zu mindestens einem hohlen Spinnfaden, dessen Hohlraum mit dem Koagulationsmedium gefüllt ist,
Einleiten des mindestens einen Spinnfadens in ein Fällbad, enthaltend ein Fällmittel, und Ausfällen des mindestens einen Spinnfadens zu mindestens einer Hohlfasermembran,
gegebenenfalls anschließendes Einleiten der mindestens einen Hohlfasermembran in ein Spülbad, enthaltend ein Spülmittel,
Einleiten der aus dem Fällbad erhaltenen mindestens einen Hohlfasermembran oder Einleiten der gegebenenfalls aus dem Spülbad erhaltenen mindestens einen Hohlfasermembran in mindestens eine Trocknungseinheit,
gegebenenfalls Aufnehmen der aus der Trocknungseinheit gewonnenen mindestens einen Hohlfasermembran auf einen Träger,
dadurch gekennzeichnet, dass die Transportgeschwindigkeit der Hohlfasermembran 550 mm/ s bis 1000 mm/s, bevorzugt über 650 mm/s bis 900 mm/s, weiter bevorzugt 750 mm/s bis 800 mm/s beträgt.
Eine Ausführungsform des dritten Aspekts ist dadurch gekennzeichnet, dass
die mindestens eine Trocknungseinheit einen Druckabschnitt aufweist, in dem ein atmosphärischer Überdruck eingestellt ist.
Bei diesen Spinngeschwindigkeiten ist eine besonders wirtschaftliche Herstellung von Hohlfasermembranen möglich. Die Ausführungsformen des zweiten Aspektes der Erfindung sind ebenfalls Gegenstand des dritten Aspekts der Erfindung.

### BESCHREIBUNG DER ERFINDUNG ANHAND DER ZEICHNUNGEN

Im Folgenden werden weitere Ausführungsformen der Erfindung anhand der Figuren erläutert.
Fig. 1 zeigt in schematischer Darstellung eine Ausführungsform der erfindungsgemäßen Anlage 100 zur Herstellung mindestens einer Hohlfasermembran. In Fig. 1 gezeigt ist in schematischer vereinfachter Darstellung der Querschnitt einer Ringspaltdüse 101. Die Quelle einer Spinnmasse und die Quelle eines Koagulationsmediums sind in Fig. 1 nicht gezeigt. Fig. 1 zeigt weiterhin schematisch den Spinnfaden 102, der durch den Fällspalt 102b durch das Fällbad 103 geleitet wird. Weiterhin sind schematisch Umlenkrollen 105a bis 105l gezeigt, mit der der Spinnfaden und die Hohlfasermembran durch die Anlage geführt werden. Die im Fällbad 103 ausgebildete Hohlfasermembran 104 wird durch Umlenkrollen in ein Spülbad 106 geführt. In alternativen Ausführungen können mehrere Spülbäder hintereinander angeordnet sein (nicht in Fig. 1 gezeigt). Weiterhin zeigt Fig. 1 schematisch eine Druckkammer 200 mit einem Einlass 201 und einem Auslass 202 für die eine in Fig. 1 gezeigte Hohlfasermembran 104. Die Hohlfasermembran 104 durchläuft die Druckkammer und wird durch einen Einlass 301, Umlenkrollen 105h bis 105l und einen Auslass 302 durch die Temperierungskammer 300 geführt. Schematisch dargestellt ist eine Haspel 400, die die Hohlfasermembran 104 aufnimmt und zu Bündelsträngen von Hohlfasermembranen zusammenlegt. Zur Vereinfachung ist in der schematischen Darstellung von Fig. 1 die Herstellung nur einer Hohlfasermembran gezeigt. Die in Fig. 1 gezeigte Anlage ist aber gleichermaßen auch für die Herstellung einer Vielzahl von Hohlfasermembranen geeignet. Die Druckkammer 200 und die Temperierungskammer 300 bilden zusammen eine Trocknungseinheit 350. Die Temperierungskammer kann in der gezeigten schematischen Ausführungsform der Fig. 1 bei einem Temperaturbereich von 100 bis 230°C betrieben werden. Ein Ondulierungswerkzeug ist nicht in Fig. 1 gezeigt. Ein Ondulierungswerkzeug kann zusätzlich zwischen Temperierungskammer 300 und Haspel 400 angeordnet sein. Ebenfalls nicht gezeigt in der Fig. 1 ist der Gaseinlass an der Druckkammer 200. Dieser ist in den folgenden Figuren gezeigt. Mit der gezeigten Anlage 100 können sind Hohlfasermembran nach dem NIPS und TIPS Prinzip herstellbar.
Fig. 2 zeigt in schematischer Darstellung den Querschnitt einer Druckkammer 200 gemäß einer illustrativen Ausführungsform. In Fig. 2 gezeigt ist eine Hohlfasermembran 104, die durch einen Einlass 201 und einen Auslass 202 durch die Druckkammer 200 geführt wird. Weiterhin gezeigt ist ein Gaseinlass 203 und ein Ventil 204, dass vorhanden sein kann, um den Zustrom von Gas in die Druckkammer zu regulieren. Die Druckkammer weist einen Innenraum 205 auf, der in der gezeigten Darstellung einen Hohlraum bildet. Beim Einleiten von Gas durch den Gaseinlass 203 baut sich im Innenraum 205 ein atmosphärischer Überdruck auf.

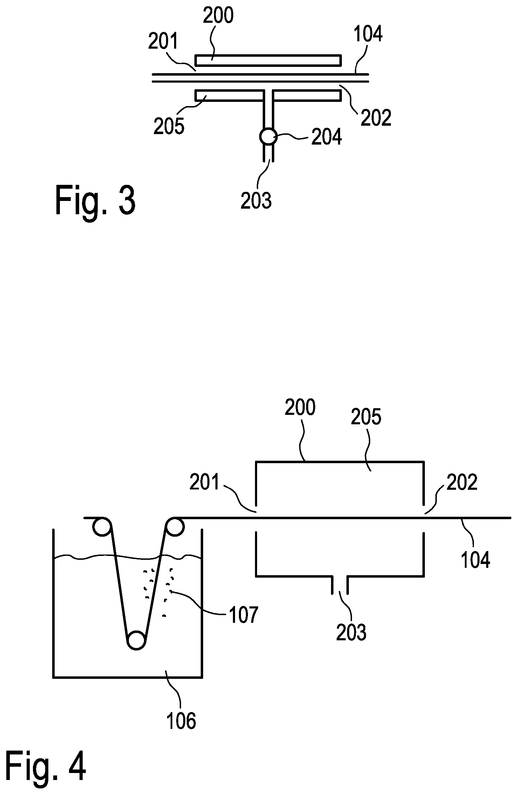

Fig. 3 zeigt in schematischer Darstellung den Querschnitt einer Druckkammer 200 gemäß einer weiteren illustrativen Ausführungsform. Analog zu Fig. 2 zeigt Fig. 3 einen Einlass 201 zum Einleiten der mindestens einen Hohlfasermembran, einen Auslass 202 zum Ausleiten der mindestens einen Hohlfasermembran 104, einen Gaseinlass 203, ein Ventil 204, sowie einen Innenraum 205. Die Druckkammer kann nach dieser Ausführung eine rohrförmige Geometrie oder spaltförmige Geometrie aufweisen.
Fig. 4 zeigt in schematischer Darstellung einen Ausschnitt aus der erfindungsgemäßen Anlage 100. Gezeigt werden das Spülbad 106, die Hohlfasermembran 104, die durch das Spülbad und durch die Druckkammer 200 geführt wird, der Einlass 201 und Auslass 202 der Druckkammer sowie der Gaseinlass 203 der Druckkammer. Durch Einleiten von Gas durch den Gaseinlass 203 in den Innenraum wird ein atmosphärischer Überdruck in der Druckkammer aufgebaut, wodurch ein Teil des in der Hohlfasermembran 104 transportierten Wassers oder der Flüssigkeit aus der Hohlfasermembran abgetrennt wird. Insbesondere dringt das Gas in die Poren und in den Hohlraum der Hohlfasermembran ein und breitet sich Hohlraum der Hohlfasermembran mit und gegen die Transportrichtung der Hohlfasermembran aus. Bei einem Druck von 3000 hPa in der Druckkammer breitet sich das Gas in der Hohlfasermembran gegen die Transportrichtung soweit aus, dass in dem gegebenenfalls vorgelagerten Spülbad oder dem vorgelagerten Fällbad eine Gasblasenentwicklung beobachtet werden kann.

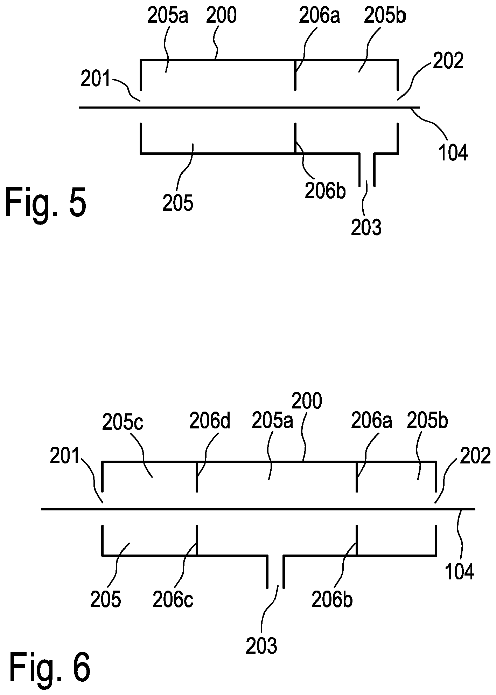

Fig. 5 zeigt in schematischer Darstellung eine weitere illustrative Ausführungsform einer Druckkammer 200, wobei der Innenraum 205 durch zwei Wandungen 206a und 206b in zwei Kompartimente 205a und 205b unterteilt ist und die Hohlfasermembran 104 durch den Einlass 201 und den Auslass 202 durch die Druckkammer 200 geführt wird. Der Gaseinlass 203 ist dabei am Kompartiment 205b angeordnet. Das einströmende Gas verursacht im Kompartiment 205b einen ersten atmosphärischen Überdruck mit einem Druck P1, wobei sich im zweiten Kompartiment 205a ein zweiter atmosphärischer Überdruck mit dem Druck P2 einstellt. Gemäß der in Fig. 5 dargestellten Ausführungsform ist P1 größer als P2. Der Druck P1 kann 3000 hPa betragen. Der Druck P2 kann 1500 hPa betragen. Durch die Kompartimente wird innerhalb der Druckkammer ein Druckgradient eingestellt.
Fig. 6 zeigt in schematischer Darstellung eine weitere illustrative Ausführungsform einer Druckkammer 200, wobei der Innenraum 205 durch vier Wandungen 206a, 206b, 206c und 206d in die Kompartimente 205a, 205b und 205c unterteilt ist und die Hohlfasermembran 104 durch den Einlass 201 und den Auslass 202 durch die Druckkammer 200 geführt wird. Der Gaseinlass 203 ist dabei am Kompartiment 205a angeordnet. Das einströmende Gas verursacht im Kompartiment 205a einen ersten atmosphärischen Überdruck mit einem Druck P1, wobei sich im Kompartiment 205b ein zweiter atmosphärischer Überdruck mit dem Druck P2 einstellt und im Kompartiment 205c ein dritter atmosphärischer Überdruck mit dem Druck P3 entsteht. Gemäß der in Fig. 6 dargestellten Ausführungsform ist P1 größer als P2. Der Druck P1 kann 3000 hPa betragen und ist größer als der Druck P2. Der Druck P2 ist größer als der Druck P3, der 1500 hPa betragen kann.

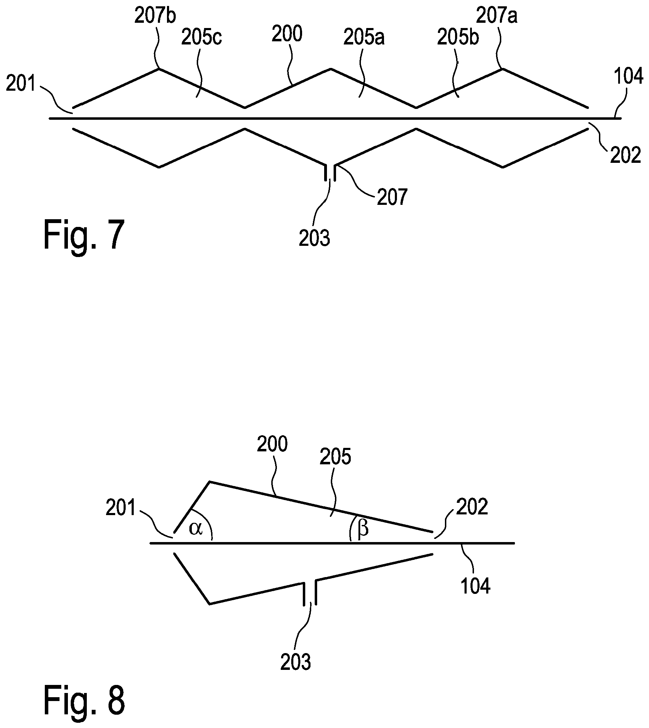

Fig. 7 zeigt in schematischer Darstellung eine erfindungsgemäße Ausführungsform einer Druckkammer 200, wobei der Innenraum 205 mehrere Querschnittsvergrößerungen und mehrere Querschnittsverkleinerungen aufweist, wobei die Querschnittsvergrößerungen und die Querschnittsverkleinerungen mehrere konusförmige Abschnitte der Innenseite der Druckkammer bilden. Durch die konusförmigen Abschnitte im Innenraum der Druckkammer 200 werden drei Kompartimente 205a, 205b und 205c gebildet, wobei die Hohlfasermembran 104 durch den Einlass 201 und den Auslass 202 durch die Druckkammer 200 geführt wird. Die konusförmigen Abschnitte der Innenseite der Druckkammer sind symmetrisch zum Gaseinlass 203 angeordnet. Der Gaseinlass 203 ist dabei am Kompartiment 205a angeordnet. Das einströmende Gas verursacht im Kompartiment 205a einen ersten atmosphärischen Überdruck mit einem Druck P1, wobei sich im Kompartiment 205b ein zweiter atmosphärischer Überdruck mit dem Druck P2 einstellt und im Kompartiment 205c ein dritter atmosphärischer Überdruck mit dem Druck P3 entsteht. Gemäß der in Fig. 6 dargestellten Ausführungsform ist P1 größer als P2. Der Druck P1 kann 3000 hPa betragen und ist größer als der Druck P2. Der Druck P2 ist größer als der Druck P3, der 1500 hPa betragen kann. Gemäß Fig. 7 ist der mindestens eine Gaseinlass 203 der Druckkammer 200 an einem Querschnittsmaximum 207 der lichten Weite des Innenraums der Druckkammer angeordnet, wobei der Gaseinlass zwischen dem Einlass und dem Auslass der Druckkammer mittig angeordnet ist. Die in Fig. 7 gezeigten Querschnittsmaxima der lichten Weite des Innenraums der Druckkammer 207, 207a und 207b sind gleich groß.

Mit den in den Fig. 5 bis 7 gezeigten Ausführungsformen ist eine besonders effiziente Abtrennung von Wasser aus der Hohlfasermembran möglich. Es kann vorgesehen sein, dass die in den Fig. 5 bis 7 gezeigten Kompartimente eine Auslassöffnung für Wasser aufweisen. Ein Austrag von Wasser ist aber auch über die Einlässe 201 und Auslässe 202 der Druckkammer möglich.
Fig. 8 zeigt in schematischer Darstellung den Querschnitt einer Druckkammer 200 gemäß einer weiteren erfindungsgemäßen Ausführungsform. Fig. 8 zeigt einen Einlass 201 zum Einleiten der mindestens einen Hohlfasermembran 104, einen Auslass 202 zum Ausleiten der mindestens einen Hohlfasermembran 104, einen Gaseinlass 203 sowie einen Innenraum 205. Der Innenraum 205 der Druckkammer ist nach dieser Ausführung in zwei asymmetrische konusförmige Abschnitte unterteilt.

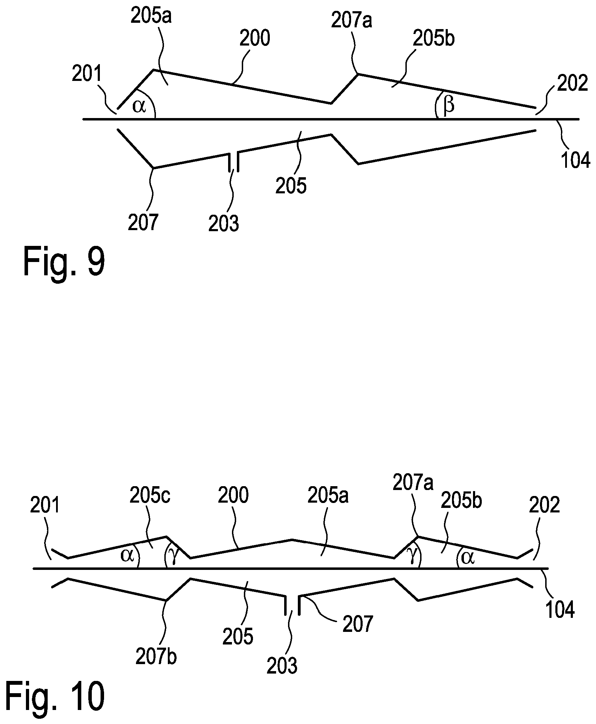

Fig. 9 zeigt in schematischer Darstellung eine weitere erfindungsgemäße Ausführungsform einer Druckkammer 200, wobei der Innenraum 205 durch mehrere Querschnittsvergrößerungen und Querschnittsverkleinerungen konusförmige Abschnitte bildet, die den Innenraum in zwei Kompartimente 205a und 205b unterteilen, wobei die Hohlfasermembran 104 durch den Einlass 201 und den Auslass 202 durch die Druckkammer 200 geführt wird. Die konusförmigen Abschnitte sind asymmetrisch im Innenraum der Druckkammer angeordnet. Der Gaseinlass 203 ist dabei am Kompartiment 205a angeordnet. Das einströmende Gas verursacht im Kompartiment 205a einen ersten atmosphärischen Überdruck mit einem Druck P1, wobei sich im zweiten Kompartiment 205b ein zweiter atmosphärischer Überdruck mit dem Druck P2 einstellt. Gemäß der in Fig. 5 dargestellten Ausführungsform ist P1 größer als P2. Der Druck P1 kann 3000 hPa betragen. Der Druck P2 kann 1500 hPa betragen. Durch die Kompartimente wird innerhalb der Druckkammer ein Druckgradient eingestellt. Das in Fig. 9 gezeigte Querschnittsmaximum der lichten Weite des Innenraums 207a ist größer als das Querschnittsmaximum der lichten Weite des Innenraums 207.

In den Fig. 8 und 9 sind Ausführungsformen gezeigt, in denen die an den Einlass 201 anschließende Konusform einen Öffnungswinkel α aufweist. Weiterhin sind in den Fig. 8 und 9 Ausführungsformen gezeigt, in denen die an den Auslass 202 anschließende Konusform einen Öffnungswinkel β aufweist. Gemäß der Ausführungsformen der Fig. 8 und 9 ist α größer als β.

Fig.10 zeigt in schematischer Darstellung eine weitere erfindungsgemäße Ausführungsform einer Druckkammer 200, wobei der Innenraum 205 mehrere Querschnittsvergrößerungen und mehrere Querschnittsverkleinerungen aufweist, wobei die Querschnittsvergrößerungen und die Querschnittsverkleinerungen mehrere konusförmige Abschnitte der Innenseite der Druckkammer bilden. Durch die konusförmigen Abschnitte im Innenraum der Druckkammer 200 werden drei Kompartimente 205a, 205b und 205c gebildet, wobei die Hohlfasermembran 104 durch den Einlass 201 und den Auslass 202 durch die Druckkammer 200 geführt wird. Die konusförmigen Abschnitte der Innenseite der Druckkammer sind symmetrisch zum Gaseinlass 203 angeordnet. Der Gaseinlass 203 ist dabei am Kompartiment 205a angeordnet. Das einströmende Gas verursacht im Kompartiment 205a einen ersten atmosphärischen Überdruck mit einem Druck P1, wobei sich im Kompartiment 205b ein zweiter atmosphärischer Überdruck mit dem Druck P2 einstellt und im Kompartiment 205c ein dritter atmosphärischer Überdruck mit dem Druck P3 entsteht. Gemäß der in Fig. 6 dargestellten Ausführungsform ist P1 größer als P2. Der Druck P1 kann 3000 hPa betragen und ist größer als der Druck P2. Der Druck P2 ist größer als der Druck P3, der 1500 hPa betragen kann. Gemäß Fig. 10 ist der mindestens eine Gaseinlass 203 der Druckkammer 200 an einem Querschnittsmaximum 207 der lichten Weite des Innenraums der Druckkammer angeordnet, wobei der Gaseinlass zwischen dem Einlass 201 und dem Auslass 202 der Druckkammer mittig angeordnet ist. Die in Fig. 10 gezeigten Querschnittsmaxima der lichten Weite des Innenraums der Druckkammer 207, 207a und 207b sind unterschiedlich groß. Insbesondere ist das Querschnittsmaximum 207 kleiner als die Querschnittsmaxima 207b und 207a.

In Fig. 10 ist eine Ausführungsform gezeigt, in der die an den Einlass 201 anschließende Konusform einen Öffnungswinkel α aufweist. Weiterhin ist in Fig. 10 eine Ausführungsform gezeigt, in der die an das Querschnittsmaximum 207b bzw. 207a zum mittig angeordneten Gaseinlass 203 anschließende Konusform einen Öffnungswinkel γ aufweist. In dieser Ausführungsform ist α kleiner als γ. Dies hat den Vorteil, dass abgetrenntes Wasser besonders gut abtransportiert werden kann. So kann es ermöglicht werden, die Gesamtlänge der Druckkammer 200 in Erstreckungsrichtung der durchgeleiteten Hohlfasermembran 104 auf weniger als 50 cm, vorzugsweise weniger als 20 cm, bevorzugt weniger als 12 cm zu begrenzen.

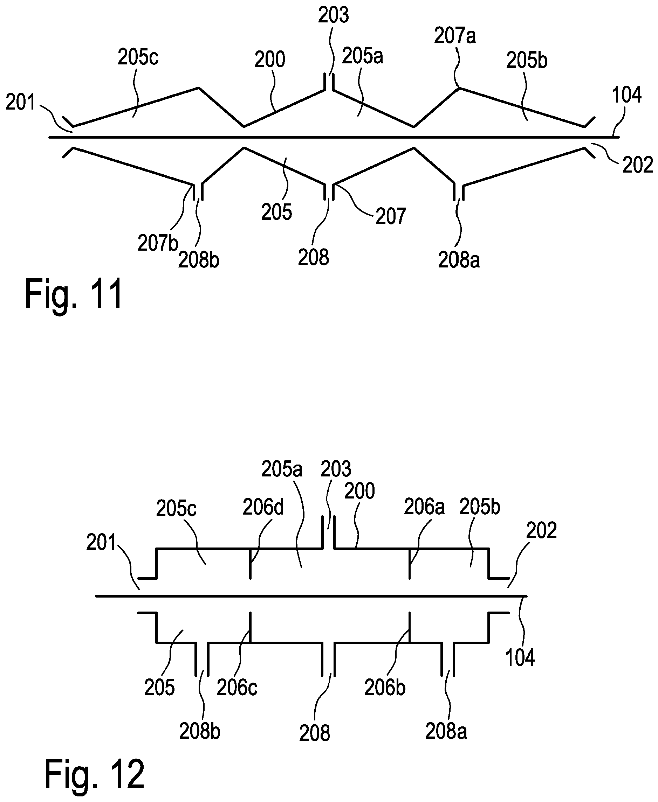

Fig.11 zeigt in schematischer Darstellung eine weitere erfindungsgemäße Ausführungsform einer Druckkammer 200. Die Ausführungsform stimmt im Wesentlichen mit der in Fig. 10 gezeigten Ausführungsform überein, wobei im Unterschied zu der Ausführungsform in Fig. 10 die Querschnittsmaxima 207, 207a und 207b gleich groß sind und an den Querschnittsmaxima 207, 207a und 207b jeweils ein Auslass 208, 208a und 208b für Flüssigkeit, insbesondere Wasser, angeordnet ist, das in der Druckkammer 200 aus der Hohlfasermembran 104 abgetrennt wird, wobei zusätzlich an dem Querschnittsmaximum 207 der Gaseinlass 203 angeordnet ist.

Fig.12 zeigt in schematischer Darstellung eine weitere nicht erfindungsgemäße Ausführungsform einer Druckkammer 200. Die Ausführungsform stimmt im Wesentlichen mit der in Fig. 6 gezeigten Ausführungsform überein, wobei im Unterschied zu der Ausführungsform in Fig. 6 jeweils an den Kompartimenten 205a, 205b und 205c Auslässe 208, 208a und 208b für Wasser angeordnet sind, welches in der Druckkammer 200 aus der Hohlfasermembran 104 abgetrennt wird.

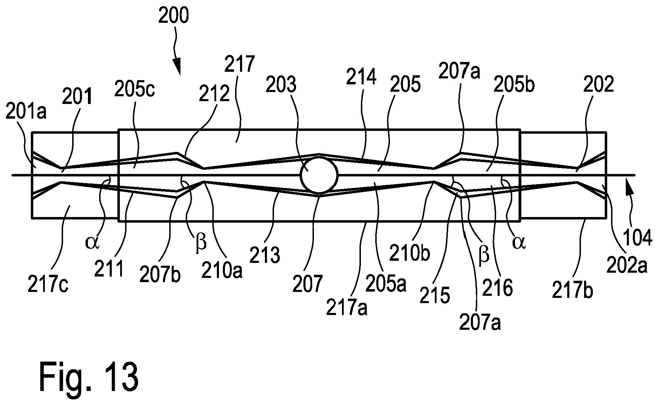

Fig. 13 zeigt in schematischer Darstellung eine Ausführungsform der Druckkammer 20, die zu der in Fig. 10 gezeigten Ausführungsform korrespondiert. Fig. 13 macht dabei weitere Details der Ausführungsform deutlich. Fig. 13 ist eine schematische Darstellung, in der Teile der gezeigten Druckkammer semitransparent dargestellt sind. Die Druckkammer ist gemäß der gezeigten Ausführungsform rohrförmig ausgebildet. Weiterhin ist die Druckkammer bis auf den Gaseinlass 200 rotationssymmetrisch zu ihrer Längserstreckungsachse ausgebildet. Die Längserstreckungsachse korrespondiert zu der Geraden, auf der die Hohlfasermembran 104 durch die Druckkammer geführt wird. In der gezeigten schematischen Darstellung liegt die bezeichnete Hohlfasermembran 104 auf der Längserstreckungsachse. In Fig. 13 sind die umhüllende rohrförmige Wandung 212 der Druckkammer sowie baulichen Teile des Gaseinlasses 203 semitransparent dargestellt. Die Wandung 217 weist in einem Mittelbereich 217a der Druckkammer einen größeren Durchmesser auf als in einem Endbereich 217b, 217c. Der Innenraum 205 der Druckkammer 200 ist in konusförmige Abschnitte unterteilt, wobei die konusförmigen Abschnitte 211, 212, 213, 214, 215 und 216 aneinander anschließen. Ein erster konusförmiger Abschnitt 211 verläuft von dem Einlass 201 für Hohlfasermembranen bis zu einem ersten Querschnittsmaximum des Innenraums 205 der Druckkammer 200. Daran anschließend verläuft ein zweiter konusförmiger Abschnitt 212 von dem ersten Querschnittsmaximum 217b bis zu einem Querschnittsminimum 210a. Daran anschließend verläuft ein dritter konusförmiger Abschnitt 213 von dem ersten Querschnittsminimum 210a bis zu einem zweiten Querschnittsmaximum 207. Daran anschließend verläuft ein vierter konusförmiger Abschnitt 214 von dem zweiten Querschnittsmaximum 207 zu einem zweiten Querschnittsminimum 210b. Daran anschließend verläuft ein fünfter konusförmiger Abschnitt 215 von dem zweiten Querschnittsminimum 210b bis zu einem dritten Querschnittsmaximum 207a. Daran anschließend verläuft ein sechster konusförmiger Abschnitt 216 von dem dritten Querschnittsmaximum bis zum Auslass 202 für die Hohlfasermembran 104. Das durch den Gaseinlass eingeströmte Gas bildet im Innenraum 205 der Druckkammer einen atmosphärischen Überdruck aus, der sich von dem Einlass für die Hohlfasermembran 201 bis zu dem Auslass 202 für die Hohlfasermembran erstreckt. An den Einlass 201 und den Auslass 202 schließen sich trichterförmige Öffnungen 201a und 202a an. Dadurch werden die Hohlfasermembran oder die Schar von Hohlfasermembranen beim Einleiten in die und Ausleiten aus der Druckkammer geschont. Insbesondere sind alle Kanten im Innenraum 205 der Druckkammer gerundet ausgearbeitet, um Schädigungen an der oder den Hohlfasermembran/en zu vermeiden. Die Öffnungswinkel der konusförmigen Abschnitte α und β sind durch die Anordnung der Innenseite der konusförmigen Abschnitte zu der Geraden der Längserstreckung der Druckkammer definiert. In den ersten und sechsten konusförmigen Abschnitten 211, 216 ist der Öffnungswinkel mit α bezeichnet. In den zweiten und fünften konusförmigen Abschnitten ist der Öffnungswinkel mit β bezeichnet. Vorzugsweise ist α kleiner als β, wie in Fig. 10 gezeigt. Die aneinander anschließenden konusförmigen Abschnitte 211, 212, 213, 214, 215, 216 des Innenraums 205 der Druckkammer 200 bilden drei Kompartimente 205a, 205b und 205c, so dass von dem Gaseinlass bis zu dem Einlass für die Hohlfasermembran 201 und dem Auslass für die Hohlfasermembran 202 beim Einströmen von Gas in den Innenraum 205 ein Druckgradient aufgebaut wird, wie er für die Ausführungsform gemäß Fig. 10 beschrieben wurde.

### BEISPIELE

### Vergleichsbeispiel 1

16 Hohlfasermembranen wurden gleichzeitig gemäß einer in der DE 10 2016 224 627 offenbarten Ausführungsform hergestellt. Dabei wurde die folgende Vorschrift für die Herstellung eine Hohlfasermembran verwendet:
Eine Spinnlösung bestehend aus 16 Gewichtsteilen Polysulfon (P3500 der Fa. Solvay), 4,4 Gewichtsteilen Polyvinylpyrrolidon (K82-86 der Fa. Ashland) und 79,6 Gewichtsteilen DMAC wurde unter Rühren, Erwärmen auf 60°C und Entgasen zu einer homogenen Spinnmasse verarbeitet. Die Spinnmasse wurde durch eine Ringspaltdüse mit einer zentralen Bohrung, durch die Koagulationsmedium geführt wurde zu einem Spinnfaden ko-extrudiert. Das Koagulationsmedium, bestehend aus 35% DMAC und 65% Wasser, wurde im Inneren des hohlen Spinnfadens geführt. Die Temperatur der Ringspaltdüse betrug 70°C. Der extrudierte Spinnfaden wurde durch einen Fällspalt geführt, dessen Atmosphäre eine relative Feuchtigkeit von 100 % aufwies. Die Höhe des Fällspaltes betrug 200 mm, es wurde eine Verweilzeit im Fällspalt von 0,4 s. eingestellt. Die Abzugsgeschwindigkeit des Spinnfadens betrug demnach 650 mm/s. Die Verweilzeit des Spinnfadens im Fällspalt ist abhängig von der Abzugsgeschwindigkeit und kann in alternativen Vergleichsbeispielen variiert werden. Der Spinnfaden wurde in das Fällbad bestehend aus Wasser eingeleitet, das auf 80°C temperiert war und zu einer Hohlfasermembran ausgefällt. Anschließend wurde die Hohlfasermembran durch Spülbäder, die auf eine Temperatur von 75°C bis 90°C temperiert waren, geleitet. Anschließend durchlief die Hohlfasermembran bei einer Temperatur von 100°C bis 150°C eine Temperierungskammer einer Trocknungseinheit und wurde so getrocknet. Die Transportgeschwindigkeit der Hohlfasermembran wurde an die Abzugsgeschwindigkeit angepasst.
Die 16 Hohlfasermembranen wurden anschließend von einer Haspel aufgenommen und zusammengelegt. Die aufgehaspelten Hohlfasermembranen wurden hinsichtlich möglicher Faserdefekte analysiert. In den aufgehaspelten Hohlfasermembranen wurden vermehrt abgeflachte Fasern bzw. Faserabrisse festgestellt.

### Vergleichsbeispiel 2

Es wurden die Bedingungen der Herstellung der Hohlfasermembranen nach Vergleichsbeispiel 1 gewählt. Die Abzugsgeschwindigkeit des Spinnfadens und der Hohlfasermembran wurde auf 450 mm/s gedrosselt. Die Transportgeschwindigkeit der Hohlfasermembran wurde an die Abzugsgeschwindigkeit angepasst. Die erhaltenen Hohlfasermembranen waren frei von Faserflachlegungen und Faserabrissen.

### Beispiel 1

Abweichend von Vergleichsbeispiel 1 wurde in Beispiel 1 die Schar von 16 Hohlfasermembranen nach Durchlaufen der Spülbäder und vor Einleiten in die Temperierungskammer durch eine Druckkammer gemäß der Ausführung nach Fig. 10 geführt. Über den Gaseinlass der Druckkammer wurde Luft eingeleitet, so dass im zentralen konusförmigen Hohlraum der Druckkammer ein Druck von 3000 hPa, im zweiten konusförmigen Hohlraum der Druckkammer ein Druck von 1500 hPa und im dritten konusförmigen Hohlraum der Druckkammer ein Druck von 1300 hPa anlag. Die getrockneten Hohlfasermembranen wurden aufgehaspelt und hinsichtlich möglicher Defekte untersucht. Die Herstellung der Hohlfasermembranen nach Beispiel 1 wurde bei verschiedenen Abzugsgeschwindigkeiten durchgeführt. Demnach wurden bei einer Abzugsgeschwindigkeit von 650 mm/s keine Faserschädigungen festgestellt. Der Begriff Abzugsgeschwindigkeit bezeichnet dabei die Durchlaufgeschwindigkeit der Hohlfasermembran durch die Anlage zur Herstellung der Hohlfasermembran.
Gemäß Beispiel 1 kann also die Abzugsgeschwindigkeit erhöht werden, so dass⁻verglichen mit den Vergleichsbeispielen und damit dem Stand der Technik ⁻ eine höhere Produktionsgeschwindigkeit resultierte. Daraus ergab sich auch eine Energieersparnis, bezogen auf 1 km Länge der Hohlfaser. Alternativ kann dadurch auch die Wegstrecke im Temperierungsabschnitt verkürzt werden, so dass die Anlage zur Herstellung der Hohlfasermembranen mit reduziertem baulichem Aufwand betrieben werden kann.

## Patentansprüche

1. Anlage (100) zur Herstellung mindestens einer Hohlfasermembran, aufweisend
eine Spinneinheit, aufweisend mindestens eine Ringspaltdüse (101), die fluidisch mit einer Quelle einer Spinnmasse und einer Quelle eines Koagulationsmediums verbunden ist, um aus der Spinnmasse mindestens einen hohlen Spinnfaden (102) zu extrudieren, dessen Hohlraum mit dem Koagulationsmedium gefüllt ist,
ein Fällbad (103), zur Fällung des mindestens einen Spinnfadens (102) zu mindestens einer Hohlfasermembran (104),
gegebenenfalls mindestens eine Spüleinheit (106), zum Spülen der mindestens einen Hohlfasermembran (104),
mindestens eine Trocknungseinheit (350) zur Trocknung der mindestens einen Hohlfasermembran (104),
gegebenenfalls eine Aufnahmeeinheit (400) zur Aufnahme der mindestens einen Hohlfasermembran (104) auf einen Träger,
**dadurch gekennzeichnet, dass**
die mindestens eine Trocknungseinheit einen Druckabschnitt aufweist, der so ausgebildet ist, dass in dem Druckabschnitt ein atmosphärischer Überdruck einstellbar ist, wobei
der Druckabschnitt der Trocknungseinheit; eine Druckkammer aufweist (200), die einen Innenraum (205), einen Einlass (201) zum Einleiten der mindestens einen Hohlfasermembran (104) in den Innenraum (205) der Druckkammer, einen Auslass (202) zum Ausleiten der mindestens einen Hohlfasermembran (104) aus dem Innenraum (205) der Druckkammer und mindestens einen Gaseinlass (203) aufweist, wobei der mindestens eine Gaseinlass (203) in Fluidverbindung mit einer Gasquelle steht und der Druckabschnitt weiter so ausgebildet ist, das ein Überdruck über die Gasquelle im Innenraum (205) der Druckkammer (200) erzeugt werden kann und
die lichte Weite des Innenraums (205) der Druckkammer (200) im Querschnitt parallel zur Laufrichtung der mindestens einen Hohlfasermembran mindestens eine Querschnittsvergrößerung und mindestens eine Querschnittsverkleinerung aufweist, wobei die Querschnittsvergrößerung und die Querschnittsverkleinerung vorzugsweise eine Konusform der Innenseite der Druckkammer bilden.

2. Anlage nach Anspruch 1, **dadurch gekennzeichnet, dass** die Anlage so ausgebildet ist, dass der Druck in dem Druckabschnitt der Trocknungsanlage 1100 hPa bis 10.000 hPa, oder 1200 bis 5000 hPa, oder 1200 bis 4000 hPa beträgt.

3. Anlage nach Anspruch 1 oder 2, **dadurch gekennzeichnet, dass** die Querschnittsfläche des Einlasses (201) zum Einleiten der mindestens einen Hohlfasermembran (104) in den Innenraum der Druckkammer (200) und des Auslasses (202) zum Ausleiten der mindestens einen Hohlfasermembran (104) aus der Druckkammer (200) kleiner als das 30-fache, vorzugsweise kleiner als das 20-fache, weiter bevorzugt kleiner als das 10-fache, weiter bevorzugt kleiner als das 5-fache und mindestens das 1,1-fache oder mehr der Querschnittsfläche der Hohlfasermembran (104) oder der summierten Querschnittsflächen der mehreren Hohlfasermembranen ist.

4. Anlage (100) nach wenigstens einem der Ansprüche 1 bis 3, **dadurch gekennzeichnet, dass** die Trocknungseinheit (350) weiterhin einen Temperierungsabschnitt aufweist, der eine Heizvorrichtung aufweist, die so ausgebildet ist, dass in dem Temperierungsabschnitt eine Temperatur von 50 bis 230°C eingestellt werden kann.

5. Anlage nach Anspruch 4, **dadurch gekennzeichnet, dass** der Temperierungsabschnitt der Trocknungseinheit eine Temperierungskammer (300) aufweist, die einen Einlass (301) zum Einleiten der mindestens einen Hohlfasermembran (104) und einen Auslass (302) zum Ausleiten der mindestens einen Hohlfasermembran (104) aufweist.

6. Anlage (100) nach Anspruch 5, **dadurch gekennzeichnet, dass** die Druckkammer (200) und die Temperierungskammer (300) separate Kammern sind, und die Anlage weiter so ausgebildet ist, dass die aus dem Fällbad, oder gegebenenfalls die aus dem Spülbad erhaltene mindestens eine oder mehrere Hohlfasermembran zuerst durch die Druckkammer (200) und anschließend durch die Temperierungskammer geführt (300) werden.

7. Anlage nach wenigstens einem der Ansprüche 1 bis 6, **dadurch gekennzeichnet, dass** die Druckkammer (200) des Druckabschnitts in mehrere Kompartimente (205a), (205b), (205c) unterteilt ist.

8. Anlage nach wenigstens einem der Ansprüche 1 bis 7, **dadurch gekennzeichnet, dass** die lichte Weite des Innenraums (205) der Druckkammer (200) im Querschnitt parallel zur Laufrichtung der mindestens einen Hohlfasermembran mindestens eine Querschnittsvergrößerung und mindestens eine Querschnittsverkleinerung aufweist, wobei die Querschnittsvergrößerung und die Querschnittsverkleinerung vorzugsweise eine Konusform der Innenseite der Druckkammer bilden.

9. Anlage nach wenigstens einem der Ansprüche 1 bis 8, **dadurch gekennzeichnet, dass** die Druckkammer (200) einen oder mehrere Auslässe (208, 208a, 208b) für das Ablassen von Flüssigkeit, insbesondere Wasser aufweist, wobei die Auslässe vorzugsweise an einem Querschnittsmaximum der lichten Weite des Innenraums der Druckkammer (200) angeordnet sind.

10. Verfahren zur Herstellung mindestens einer Hohlfasermembran (104), aufweisend die Schritte
Bereitstellen einer Quelle einer Spinnmasse,
Bereitstellen einer Quelle für ein Koagulationsmedium,
Co-Extrudieren der Spinnmasse und des Koagulationsmediums durch mindestens eine Ringspaltdüse (101) zu mindestens einem hohlen Spinnfaden (102), dessen Hohlraum mit dem Koagulationsmedium gefüllt ist,
Einleiten des mindestens einen Spinnfadens (102) in ein Fällbad (103), enthaltend ein Fällmittel und Ausfällen des mindestens einen Spinnfaden (102) zu mindestens einer Hohlfasermembran (104),
gegebenenfalls anschließendes Einleiten der mindestens einen Hohlfasermembran (104) in ein Spülbad (106), enthaltend ein Spülmittel,
Einleiten der aus dem Fällbad (103) erhaltenen mindestens einen Hohlfasermembran (104) oder Einleiten der gegebenenfalls aus dem Spülbad (106) erhaltenen mindestens einen Hohlfasermembran in eine Trocknungseinheit (350),
gegebenenfalls Aufnehmen der aus der Trocknungseinheit (350) gewonnenen mindestens einen Hohlfasermembran (104) auf einen Träger,
**dadurch gekennzeichnet, dass**
die mindestens eine Hohlfasermembran (104) in der Trocknungseinheit einen Druckabschnitt durchläuft, in dem durch Einleiten eines Gases, das bevorzugt ausgewählt ist aus der Gruppe bestehend aus Luft, Stickstoff, Argon Kohlendioxid, Wasserdampf oder Gemischen davon, in den Druckabschnitt ein atmosphärischer Überdruck erzeugt wird und in dem zumindest ein Teil des in der mindestens einen Hohlfasermembran (104) enthaltenen Fällmittels, oder Spülmittels, aus der mindestens einen Hohlfasermembran abgetrennt wird
wobei der Druckabschnitt der Trocknungseinheit; eine Druckkammer (200) aufweist, und die mindestens eine Hohlfasermembran (104) durch einen Einlass (201) in einen Innenraum (205) der Druckkammer (200) eingeleitet wird, wobei die lichte Weite des Innenraums (205) der Druckkammer (200) im Querschnitt parallel zur Laufrichtung der mindestens einen Hohlfasermembran mindestens eine Querschnittsvergrößerung und mindestens eine Querschnittsverkleinerung aufweist, wobei die Querschnittsvergrößerung und die Querschnittsverkleinerung vorzugsweise eine Konusform der Innenseite der Druckkammer bilden,
und die Hohlfasermembran (104) durch einen Auslass (202) aus dem Innenraum (205) der Druckkammer ausgeleitet wird.

11. Verfahren nach Anspruch 10, **dadurch gekennzeichnet, dass** der atmosphärische Überdruck im Druckabschnitt auf einen Druck von 1100 hPa bis 10.000 hPa, oder 1200 bis 5000 hPa, oder 1200 bis 4000 hPa eingestellt wird.

12. Verfahren nach wenigstens einem der Ansprüche 10 oder 11, **dadurch gekennzeichnet, dass** Druckabschnitt auf 30 bis 125 °C, vorzugsweise 30 bis 110 °C, weitervorzugsweise 30 bis 90°C temperiert wird.

13. Verfahren nach einem der Ansprüche 10 bis 12, **dadurch gekennzeichnet, dass** die Transportgeschwindigkeit des Spinnfadens 550 mm/s bis 1000 mm/s, bevorzugt 650 mm/s bis 900 mm/s, weiter bevorzugt 750 mm/s bis 800 mm/s beträgt.

## Claims

1. An apparatus (100) for the manufacture of at least one hollow fiber membrane, comprising
a spinning unit comprising at least one annular gap nozzle (101) which is fluidically connected to a source of a spinning mass and a source of a coagulation medium in order to extrude at least one hollow spinning thread (102) from the spinning mass, the cavity of which hollow spinning thread is filled with the coagulation medium,
a precipitation bath (103) for precipitating the at least one spinning thread (102) to form at least one hollow fiber membrane (104),
if necessary, at least one rinsing unit (106) for rinsing the at least one hollow fiber membrane (104),
at least one drying unit (350) for drying the at least one hollow fiber membrane (104),
if necessary, a receiving unit for receiving the at least one hollow fiber membrane on a support, wherein the at least one drying unit comprises a pressure section which is constructed in such a way that a positive pressure compared with atmospheric pressure can be set in the pressure section, wherein
the pressure section of the drying unit comprises a pressure chamber(200) which comprises an interior space (205), an inlet (201) for introducing the at least one hollow fiber membrane (104) into the interior space (205) of the pressure chamber, an outlet (202) for discharging the at least one hollow fiber membrane (104) from the interior space (205) of the pressure chamber and at least one gas inlet (203), wherein the at least one gas inlet (203) is in fluid communication with a gas source and the pressure section is further constructed in such a way that a positive pressure can be generated in the interior space (205) of the pressure chamber (200) via the gas source, and wherein
the clear width of the interior space (205) of the pressure chamber (200) has, in the cross section parallel to the direction of travel of the at least one hollow fiber membrane, at least one enlargement of the cross section and at least one reduction of the cross section, wherein the enlargement of the cross section and the reduction of the cross section result in a conical shape of the inner side of the pressure chamber.

2. The apparatus according to claim 1, wherein the apparatus is constructed in such a way that the pressure in the pressure section of the drying apparatus is 1100 hPa to 10000 hPa or 1200 to 5000 hPa, or 1200 to 4000 hPa.

3. The apparatus according to claim 1 or 2, wherein a cross-sectional area of the inlet (201) for introducing the at least one hollow fiber membrane (2014) into the interior space of the pressure chamber (200), and of the outlet (202) for discharging the at least one hollow fiber membrane (104) from the pressure chamber (200) is less than 30 times, preferably less than 20 times, preferably less than 10 times, further preferably less than 5 times and at least 1.1 times or more the cross-sectional area of the hollow fiber membrane (104) or the total of the cross-sectional areas of the plurality of hollow fiber membranes.

4. The apparatus according to at least one of claims 1 to 3, wherein the drying unit (350) further comprises a tempering section which has a heating device which is arranged so that a temperature of 50 to 230° C can be set in the tempering section.

5. The apparatus according to claim 5, wherein the tempering section of the drying unit comprises a tempering chamber (300) which has an inlet (301) for introducing the at least one hollow fiber membrane (104) and an outlet (302) for discharging the at least one hollow fiber membrane (104).

6. The apparatus according to claim 5, wherein the pressure chamber (200) and the tempering chamber (300) are separate chambers, and that the apparatus is further constructed in such a way that the at least one hollow fiber membrane or several hollow fiber membranes obtained from the precipitation bath or, if applicable, from the rinsing bath is/are first passed through the pressure chamber (200) and then through the tempering chamber (300).

7. The apparatus according to at least one of claims 1 to 6, wherein the pressure chamber (200) of the pressure section is divided into several compartments (205a), (205b), (205c).

8. The apparatus according to at least one of claims 1 to 7, wherein the clear width of the interior space (205) of the pressure chamber (200) has, in the cross section parallel to the direction of travel of the at least one hollow fiber membrane, at least one enlargement of the cross section and at least one reduction of the cross section, wherein the enlargement of the cross section and the reduction of the cross section result in a conical shape of the inner side of the pressure chamber.

9. The apparatus according to at least one of claims 1 to 8, wherein the pressure chamber (200) has one or more outlets (208, 208a, 208b) for discharging liquid, in particular water, wherein the outlets are arranged at a position where the cross section of the clear width of the interior space of the pressure chamber (200) has a maximum.

10. A method of producing at least one hollow fiber membrane comprising the steps of
providing a source of a spinning mass,
providing a source of a coagulation medium,
co-extruding the spinning mass and the coagulation medium through at least one annular gap nozzle (101) into at least one hollow spinning thread (102), the cavity of which is filled with the coagulation medium,
introducing the at least one spinning thread (102) into a precipitation bath (103) containing a precipitating agent and precipitating the at least one spinning thread (102) to at least one hollow fiber membrane (104),
optionally subsequently introducing the at least one hollow fiber membrane (104) into a rinsing bath (106) containing a rinsing agent,
introducing the at least one hollow fiber membrane (104) which has been obtained from the precipitation bath (103), or, if applicable, introducing the at least one hollow fiber membrane which has been obtained from the rinsing bath (106), into a drying unit (450), if applicable, receiving, on a support, the at least one hollow fiber membrane (104) obtained from the drying unit (350),
wherein the at least one hollow fiber membrane (104) passes through a pressure section in the drying unit, in which pressure section a positive pressure compared with atmospheric pressure is generated by introducing a gas, which is selected from the group consisting of air, nitrogen, argon, carbon dioxide, water vapor or mixtures thereof, into the pressure section and in which at least part of the precipitating agent or rinsing agent contained in the at least one hollow fiber membrane (104) is separated from the at least one hollow fiber membrane, wherein
the pressure section of the drying unit comprises a pressure chamber (200) and the at least one hollow fiber membrane (104) is introduced through an inlet (201) into the interior space (205) of the pressure chamber (200), wherein the clear width of the interior space (205) of the pressure chamber (200) has, in the cross section parallel to the direction of travel of the at least one hollow fiber membrane, at least one enlargement of the cross section and at least one reduction of the cross section, wherein the enlargement of the cross section and the reduction of the cross section result in a conical shape of the inner side of the pressure chamber, and
the hollow fiber membrane (104) is discharged from the interior space (205) of the pressure chamber via an outlet (202).

11. The method according to claim 10, wherein the positive pressure - compared with atmospheric pressure - in the pressure section is set to a pressure of from 1100 hPa to 10,000 hPa or 1200 to 4000 hPa.

12. The method according to claim 10 or 11, wherein the pressure section is tempered to 30 to 125° C, preferably 20 to 110 °C, further preferably 30 to 90 °C.

13. The method according to at least one of claims 10 to 12, wherein the transport speed of the spinning thread is 550 mm/s to 1000 mm/s, preferably 650 mm/s to 90 mm/s, further preferably 750 mm/s to 800 mm/s.

## Revendications

1. Installation (100) pour la fabrication d'au moins une membrane à fibres creuses, comprenant
une unité de filage, comprenant au moins une buse à fente annulaire (101), qui est reliée fluidiquement à une source d'une matière à filer et une source d'un milieu de coagulation, afin d'extruder à partir de la matière à filer au moins un fil (102) creux dont la cavité est remplie du milieu de coagulation,
un bain de précipitation (103), pour la précipitation de l'au moins un fil (102) en au moins une membrane à fibres creuses (104),
le cas échéant au moins une unité de rinçage (106), pour rincer l'au moins une membrane à fibres creuses (104),
au moins une unité de séchage (350) pour le séchage de l'au moins une membrane à fibres creuses (104),
le cas échéant une unité de réception (400) pour la réception de l'au moins une membrane à fibres creuses (104) sur un support,
**caractérisée en ce que**
l'au moins une unité de séchage présente une section de pression qui est réalisée de sorte qu'une surpression atmosphérique peut être réglée dans la section de pression, dans laquelle
la section de pression de l'unité de séchage comprend une chambre de pression (200) qui comprend un espace intérieur (205), une entrée (201) pour l'introduction de l'au moins une membrane à fibres creuses (104) dans l'espace intérieur (205) de la chambre de pression, une sortie (202) pour l'évacuation de l'au moins une membrane à fibres creuses (104) de l'espace intérieur (205) de la chambre de pression et au moins une entrée de gaz (203), dans laquelle l'au moins une entrée de gaz (203) est en liaison fluidique avec une source de gaz et la section de pression est en outre réalisée de sorte qu'une surpression peut être produite dans l'espace intérieur (205) de la chambre de pression (200) par l'intermédiaire de la source de gaz et
la largeur intérieure de l'espace intérieur (205) de la chambre de pression (200) présente en section transversale parallèlement à la direction d'avance de l'au moins une membrane à fibres creuses au moins une augmentation de section transversale et au moins une diminution de section transversale, dans laquelle l'augmentation de section transversale et la diminution de section transversale forment de préférence une forme conique de la face intérieure de la chambre de pression.

2. Installation selon la revendication 1, **caractérisée en ce que** l'installation est réalisée de sorte que la pression dans la section de pression de l'installation de séchage est égale à 1100 hPa à 10 000 hPa, ou 1200 à 5000 hPa, ou 1200 à 4000 hPa.

3. Installation selon la revendication 1 ou 2, **caractérisée en ce que** la surface de section transversale de l'entrée (201) pour l'introduction de l'au moins une membrane à fibres creuses (104) dans l'espace intérieur de la chambre de pression (200) et de la sortie (202) pour l'évacuation de l'au moins une membrane à fibres creuses (104) de la chambre de pression (200) est inférieure à 30 fois, de préférence inférieure à 20 fois, plus préférentiellement inférieure à 10 fois, plus préférentiellement inférieure à 5 fois et au moins 1,1 fois ou plus la surface de section transversale de la membrane à fibres creuses (104) ou les surfaces de section transversale additionnées des plusieurs membranes à fibres creuses.

4. Installation (100) selon au moins l'une des revendications 1 à 3, **caractérisée en ce que** l'unité de séchage (350) comprend en outre une section de thermorégulation, qui comprend un dispositif de chauffage qui est réalisé de sorte qu'une température de 50 à 230 °C peut être réglée dans la section de thermorégulation.

5. Installation selon la revendication 4, **caractérisée en ce que** la section de thermorégulation de l'unité de séchage comprend une chambre de thermorégulation (300), qui comprend une entrée (301) pour l'introduction de l'au moins une membrane à fibres creuses (104) et une sortie (302) pour l'évacuation de l'au moins une membrane à fibres creuses (104).

6. Installation (100) selon la revendication 5, **caractérisée en ce que** la chambre de pression (200) et la chambre de thermorégulation (300) sont des chambres séparées, et l'installation est en outre réalisée de sorte que les au moins une ou plusieurs membranes à fibres creuses obtenues du bain de précipitation, ou le cas échéant du bain de rinçage, sont tout d'abord guidées à travers la chambre de pression (200) et ensuite à travers la chambre de thermorégulation (300).

7. Installation selon au moins l'une des revendications 1 à 6, **caractérisée en ce que** la chambre de pression (200) de la section de pression est subdivisée en plusieurs compartiments (205a), (205b), (205c).

8. Installation selon au moins l'une des revendications 1 à 7, **caractérisée en ce que** la largeur intérieure de l'espace intérieur (205) de la chambre de pression (200) en section transversale parallèlement à la direction d'avance de l'au moins une membrane à fibres creuses comprend au moins une augmentation de section transversale et au moins une diminution de section transversale, dans laquelle l'augmentation de section transversale et la diminution de section transversale forment de préférence une forme conique de la face intérieure de la chambre de pression.

9. Installation selon au moins l'une des revendications 1 à 8, **caractérisée en ce que** la chambre de pression (200) comprend une ou plusieurs sorties (208, 208a, 208b) pour faire sortir le liquide, en particulier de l'eau, dans laquelle les sorties sont disposées de préférence sur un maximum de section transversale de la largeur intérieure de l'espace intérieur de la chambre de pression (200).

10. Procédé pour la fabrication d'au moins une membrane à fibres creuses (104), comprenant les étapes de
fourniture d'une source d'une matière à filer,
fourniture d'une source pour un milieu de coagulation,
co-extrusion de la matière à filer et du milieu de coagulation à travers au moins une buse à fente annulaire (101) en au moins un fil (102) creux dont la cavité est remplie du milieu de coagulation,
introduction de l'au moins un fil (102) dans un bain de précipitation (103), contenant un agent de précipitation et précipitation de l'au moins un fil (102) en au moins une membrane à fibres creuses (104),
puis le cas échéant introduction de l'au moins une membrane à fibres creuses (104) dans un bain de rinçage (106), contenant un agent de rinçage,
introduction de l'au moins une membrane à fibres creuses (104) obtenue du bain de précipitation (103) ou introduction de l'au moins une membrane à fibres creuses obtenue le cas échéant du bain de rinçage (106) dans une unité de séchage (350),
le cas échéant réception de l'au moins une membrane à fibres creuses (104) acquise de l'unité de séchage (350) sur un support,
**caractérisée en ce que**
l'au moins une membrane à fibres creuses (104) dans l'unité de séchage traverse une section de pression dans laquelle par introduction d'un gaz, qui est choisi de préférence dans le groupe constitué par l'air, l'azote, l'argon, le dioxyde de carbone, la vapeur d'eau ou leurs mélanges, une surpression atmosphérique est produite dans la section de pression et dans laquelle au moins une partie de l'agent de précipitation, ou l'agent de rinçage, contenu dans l'au moins une membrane à fibres creuses (104) est séparée de l'au moins une membrane à fibres creuses
dans lequel la section de pression de l'unité de séchage comprend une chambre de pression (200), et l'au moins une membrane à fibres creuses (104) est introduite par une entrée (201) dans un espace intérieur (205) de la chambre de pression (200), dans laquelle la largeur intérieure de l'espace intérieur (205) comprend la chambre de pression (200) en section transversale parallèlement à la direction d'avance de l'au moins une membrane à fibres creuses au moins une augmentation de section transversale et au moins une diminution de section transversale, dans laquelle l'augmentation de section transversale et la diminution de section transversale forment de préférence une forme conique de la face intérieure de la chambre de pression,
et la membrane à fibres creuses (104) est évacuée de l'espace intérieur (205) de la chambre de pression par une sortie (202) .

11. Procédé selon la revendication 10, **caractérisé en ce que** la surpression atmosphérique dans la section de pression est réglée à une pression de 1100 hPa à 10 000 hPa, ou 1200 à 5000 hPa, ou 1200 à 4000 hPa.

12. Procédé selon au moins l'une des revendications 10 ou 11, **caractérisé en ce que** la section de pression est thermorégulée à 30 à 125 °C, de préférence 30 à 110 °C, plus préférentiellement 30 à 90 °C.

13. Procédé selon l'une quelconque des revendications 10 à 12, **caractérisé en ce que** la vitesse de transport du fil est égale à 550 mm/s à 1000 mm/s, de préférence 650 mm/s à 900 mm/s, plus préférentiellement 750 mm/s à 800 mm/s.
